# EUROPÄISCHE PATENTSCHRIFT

(11) **EP 2 652 339 B1**
(45) Veröffentlichungstag und Bekanntmachung des Hinweises auf die Patenterteilung: **17.05.2017**
(21) Anmeldenummer: 11788377.7
(22) Anmeldetag: 24.11.2011
(51) Int. Cl.: F15B 21/04, B60G 17/052

(54) **DRUCKLUFTVERSORGUNGSANLAGE, PNEUMATISCHES SYSTEM UND VERFAHREN ZUM BETREIBEN EINER PNEUMATIKANLAGE**
COMPRESSED AIR SUPPLY INSTALLATION, PNEUMATIC SYSTEM AND METHOD FOR OPERATING A PNEUMATIC INSTALLATION
DISPOSITIF D'ALIMENTATION EN AIR COMPRIMÉ, SYSTÈME PNEUMATIQUE ET PROCÉDÉ DE FONCTIONNEMENT D'UN DISPOSITIF PNEUMATIQUE

(30) Priorität: 16.12.2010 DE 102010054715; 05.08.2011 DE 102011109500
(43) Veröffentlichungstag der Anmeldung: 23.10.2013
(73) Patentinhaber: WABCO GmbH, 30453 Hannover (DE)
(72) Erfinder: FRANK, Dieter, 30171 Hannover (DE); MEISSNER, Frank, 30453 Hannover (DE); STABENOW, Uwe, 30880 Laatzen (DE)
(74) Vertreter: Lauerwald, Jörg
(86) Internationale Anmeldenummer: PCT/EP2011/005915
(87) Internationale Veröffentlichungsnummer: WO 2012/079698

(56) Entgegenhaltungen:
- EP-A1- 0 978 397
- EP-A2- 1 046 521
- DE-C1- 19 821 420

## Beschreibung

Die Erfindung betrifft eine Druckluftversorgungsanlage gemäß dem Oberbegriff des Anspruchs 1. Weiter betrifft die Erfindung ein pneumatisches System mit einer solchen Druckluftversorgungsanlage. Die Erfindung betrifft auch ein Verfahren gemäß dem Oberbegriff des Anspruchs 19 zum Betreiben einer Pneumatikanlage, insbesondere einer Luftfederanlage eines Fahrzeugs.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Um einen langfristigen Betrieb der Druckluftversorgungsanlage sicherzustellen weist eine Pneumatikhauptleitung der Druckluftversorgungsanlage einen Lufttrockner auf, mit dem die Druckluft zu trocknen ist. Dadurch wird die Ansammlung von Feuchtigkeit im Pneumatiksystem vermieden. Feuchtigkeit kann bei vergleichsweise niedrigen Temperaturen zu ventilschädigender Kristallbildung führen und darüber hinaus zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus mit der getrockneten Druckluft aus der Pneumatikanlage, insbesondere einer Luftfederanlage - meist im Gegenstrom, Gleichstrom jedoch teilweise auch relativ zur Befüllrichtung - durchströmt wird. Eine Regeneration des Lufttrockners wird im Wesentlichen durch einen Druckwechsel am Lufttrockner ermöglicht, wobei ein im Vergleich zur Adsorption bei der Regeneration vorliegender Druck regelmäßig geringer ist, um eine Feuchtigkeitsabgabe aus dem Granulat zu ermöglichen. Dazu kann die Entlüftungsventilanordnung geöffnet werden, wobei die Regenerationsfähigkeit des Lufttrockners regelmäßig von den Druckverhältnissen und der Druckwechselamplitude in der Druckluftversorgungsanlage abhängig ist. Auch für eine solche sogenannte Druckwechseladsorption hat es sich als wünschenswert erwiesen, eine Druckluftversorgungsanlage flexibel und gleichzeitig verlässlich auszulegen. Insbesondere soll einerseits eine vergleichsweise schnelle Entlüftung ermöglicht werden und dennoch ein für eine Regeneration des Lufttrockners ausreichend hohe Druckwechselamplitude niedriger Luftdruck - d. h. bei Regeneration - zur Verfügung stehen.

Die EP1046521A2 beschreibt eine Niveauregeleinrichtung für Fahrzeuge mit Luftfedern die folgende Merkmale aufweist:
- eine Druckluftquelle, die zum Auffüllen jeder Luftfeder über einen Lufttrockner mit dieser verbindbar ist und über ein pneumatisch steuerbares erstes Wegeventil mit der Atmosphäre verbindbar ist, wenn ein vorgegebener Förderdruck überschritten wird,
- jede Luftfeder ist zum Entleeren über eine Ablassleitung, die über das pneumatisch steuerbare erste Wegeventil und über den Lufttrockner geführt wird, mit der Atmosphäre verbindbar, wobei ein pneumatischer Steuereingang des ersten Wegeventils dann über eine Steuerleitung, die über ein zwischen den Luftfedern und dem ersten Wegeventil gelegenes steuerbares zweites Wegeventil geführt wird, mit dem Luftdruck einer Luftfeder beaufschlagt ist, wobei das pneumatisch steuerbare erste Wegeventil folgende Bestandteile enthält:
- einen ersten Kolben, der durch eine erste Feder auf einem Sitz gehalten wird, mit einem Mitnehmer, wobei der erste Kolben entgegen der Rückstellkraft der ersten Feder von seinem Sitz abhebt, wenn der pneumatische Steuereingang mit dem Luftdruck einer Luftfeder beaufschlagt wird,
- einen zweiten Kolben, der durch eine zweite Feder auf einem Dichtsitz gehalten wird und dann eine Verbindung zur Atmosphäre sperrt, und der mit dem ersten Kolben in Wirkverbindung steht, und der eine Stirnfläche aufweist, die mit der Druckluft der Druckluftquelle und der Ablassleitung beaufschlagbar ist, wobei der zweite Kolben entgegen der Rückstellkraft der zweiten Feder von seinem Dichtsitz entweder durch den Mitnehmer des ersten Kolbens, wenn dieser von seinem Sitz abgehoben wird, oder durch die von der Druckluftquelle erzeugte Druckluft, wenn diese den vorgegebenen Förderdruck überschreitet, abgehoben wird und dann mindestens eine Luftfeder bzw. die Druckluftquelle mit der Atmosphäre verbunden ist, wobei
- die Ablassleitung getrennt von der Steuerleitung durch das pneumatisch steuerbare erste Wegeventil geführt wird und durch den ersten Kolben gesperrt ist, wenn sich dieser auf seinem Sitz befindet, und geöffnet ist, wenn der erste Kolben von seinem Sitz abgehoben ist, so dass dann Luft aus einer Luftfeder in die Atmosphäre abgelassen werden kann.

Die DE19821420C1 beschreibt eine Druckluftaufbereitungseinrichtung für Druckluftbeschaffungsanlagen von Kraftfahrzeugen, die eine Baueinheit aus einem elektropneumatischen Druckregler, einem integrierten mechanisch- pneumatischen Druckregler, einem integrierten elektropneumatisch ausgebildeten Mehrkreisschutzventil und einem Lufttrockner bildet, mit einem einen Eingangsanschluss und einen Auslass aufweisenden gemeinsamen Gehäuse, in dem ein Durchtrittsraum für die herangeführte Druckluft vorgesehen ist, der über ein gesteuertes, als Sicherheitsventil ausgebildetes Auslassventil in dessen Offenstellung mit der Atmosphäre verbunden ist, mit einem dem Durchtrittsraum nachgeschalteten Rückschlagventil, mit einer Einrichtung zum abwechselnden Öffnen und Schließen des Auslassventils, und mit mehreren gleichartigen den einzelnen Kreisen zugeordneten Steuereinheiten, die je ein entgegen der Strömungsrichtung schließendes Rückschlagventil und eine Betätigungseinheit zum gesteuerten Öffnen des Rückschlagventils aufweisen, wobei der Abschaltdruck des mechanisch-pneumatischen Druckreglers gleich oder kleiner als der Abschaltdruck des elektropneumatischen Druckreglers ist, wobei der mechanisch-pneumatische Druckregler bei intakt mit Spannung versorgter Druckluftaufbereitungseinrichtung in seiner Funktion blockiert ist, und wobei die Steuereinheiten für die einzelnen Kreise auf direktem Wege wahlweise über den elektropneumatischen Druckregler oder den mechanisch-pneumatischen Druckregler ansteuerbar sind.

Die EP0978397A1 beschreibt eine Niveauregeleinrichtung für Fahrzeuge mit Luftfedern durch die ein Fahrzeugaufbau gegenüber mindestens einer Fahrzeugachse abgefedert ist, die folgende Merkmale aufweist:
- eine Druckluftquelle, die zum Auffüllen der Luftfeder über einen Lufttrockner mit der Luftfeder verbindbar ist,
- der Lufttrockner ist zum Auffüllen der Luftfeder einerseits über ein zur Luftfeder öffnendes Rückschlagventil mit der Luftfeder verbunden,
- jede Luftfeder ist zum Entleeren über den Lufttrockner und über ein pneumatisch steuerbares erstes Wegeventil mit der Atmosphäre verbindbar, wobei der pneumatische Steuereingang dieses Wegeventils dann über ein zweites steuerbares Wegeventil mit dem Druck in der Luftfeder gegen eine auf dem pneumatischen Steuereingang wirkende Rückstellkraft beaufschlagt ist,
- der pneumatische Steuereingang des pneumatisch steuerbaren ersten Wegeventils ist zum Beendigen eines Entleerungsvorganges mit der Atmosphäre verbindbar, wobei
- der Lufttrockner zum Entleeren der Luftfeder andererseits über ein pneumatisch steuerbares drittes Wegeventil mit der Luftfeder verbunden ist, wobei der pneumatische Steuereingang dieses Wegeventils dann mit dem Druck in der Luftfeder gegen eine auf den pneumatischen Steuereingang wirkende Rückstellkraft beaufschlagt ist.

DE 199 11 933 B4 offenbart eine Druckluftversorgungsanlage mit einem Lufttrockner mit einer ersten Druckluftversorgungsleitung, wobei die Druckluft durch ein Trockenmittel des Lufttrockners geleitet wird und mit einer zweiten Druckluftversorgungsleitung, deren Beströmung möglich ist, ohne dass die Druckluft durch das Trockenmittel geleitet wird.

Aus dem Stand der Technik sind verschiedenste Ansätze bekannt, eine erste pneumatische Verbindung zwischen einer eingangs genannten Druckluftzuführung und einer eingangs genannten Pneumatikanlage auszulegen. Diese berücksichtigen die Grundfunktionen einer Druckluftversorgungsanlage beim Belüften der Pneumatikanlage und Entlüften der Pneumatikanlage. Hinsichtlich des oben genannten Bedarfs einer vergleichsweise schnellen Entlüftung mit dennoch für eine Regeneration des Lufttrockners ausreichend niedrigem Luftdruck sind diese jedoch noch verbesserungswürdig.

DE 102 23 405 B4 offenbart ein Luftfedersystem eines Kraftfahrzeugs mit einer Druckluftversorgungsanlage aufweisend eine Druckleitung zur Verbindung eines Kompressors mit den Luftfedern und eine Entlüftungsleitung, über welche die Druckleitung mittels eines Schaltventils absperrbar mit der Atmosphäre verbindbar ist. Zwischen einem Trockner und Niveauregelventilen einer Galerie der Luftfederanlage ist ein als pneumatische Parallelschaltung ausgebildeter Abschnitt der Druckleitung vorgesehen, in dem eine Drossel parallel zu einem Rückschlagventil und parallel zu einem weiteren Schaltventil angeordnet ist. Das Schaltventil in der Entlüftungsleitung und das Schaltventil im Abschnitt der Druckleitung sind über elektrische Steuerleitungen mit derselben Endstufe eines Steuergeräts verbunden.

DE 101 21 582 C2 offenbart ein Luftversorgungsaggregat für eine Luftfederungsanlage, bei welcher ein Entlüftungsventil in einer Entlüftungsleitung, ein Luftfederventil in der Galerie der Luftfederungsanlage und ein Luftsteuerventil vorgesehen ist. Alle drei Ventile sind mit einer elektronischen Steuereinheit verbunden. In einem als pneumatische Parallelschaltung ausgebildeten Abschnitt einer Druckleitung zwischen Trockner und Federventil ist das Luftsteuerventil parallel zu einem Rückschlagventil geschaltet, so dass Luft zwar ungehindert in die Luftfederanlage aufgenommen werden kann, jedoch nur gesteuert über das Luftsteuerventil wieder abgelassen werden kann. Zum Ablassen von Druckluft aus der Luftfederungsanlage werden alle drei vorgenannten Ventile geöffnet.

EP 1 216 860 B1 offenbart eine Niveauregelanlage für ein Kraftfahrzeug mit Luftfedern und mit einem Steuergerät, das die Funktionen Befüllen und Leeren in Abhängigkeit von dem Niveau des Fahrzeugaufbaus steuert oder regelt. Unter anderem sind ein steuerbares Wegeventil einer Druckluftversorgungsanlage und ein steuerbares einem Speicher vorgeordnetes Wegeventil mit dem Steuergerät verbunden. Das steuerbare Wegeventil der Druckluftversorgungsanlage ist in einer Parallelschaltung zu einem Rückschlagventil angeordnet.

US 6,098,967 offenbart eine Druckluftversorgungsanlage der eingangs genannten Art, bei der in der Pneumatikhauptleitung zwischen Lufttrockner und Luftfederanlage ein als pneumatische Parallelschaltung ausgebildeter Abschnitt mit zwei zueinander parallel geschalteten Zweigleitungen angeordnet ist, wobei in einer ersten Zweigleitung ein zur Befüllung der Luftfederanlage durchströmbares Rückschlagventil und in einer zweiten Zweigleitung ein zur Entlüftung der Luftfederanlage durchströmbares Rückschlagventil mit einer Drossel und einem Schaltventil in Reihe geschaltet ist.

Eine ähnliche Druckluftversorgungsanlage ist in EP 1 046 521 B1 offenbart, die in pneumatischer Parallelschaltung ein in Entlüftungsrichtung sperrendes Rückschlagventil und einen in Entlüftungsrichtung entsperrbaren Stufenkolben eines steuerbaren Wegeventils aufweist.

Ähnlich sieht auch EP 0 978 397 B1 eine pneumatische Parallelschaltung eines in Entlüftungsrichtung sperrenden Rückschlagventils und ein in Entlüftungsrichtung entsperrbares pneumatisch vorgesteuertes Wegeventil vor. Eine konstruktive Realisierung dieser Schaltung ist beispielsweise EP1 233 183 B1 zu entnehmen, der ein vergleichsweise komplexer Aufbau der pneumatischen Parallelschaltung mit wenigstens drei Ventilen zu entnehmen ist. Ein solcher Aufbau soll dazu dienen einen Entlüftungsvorgang zeitlich effektiver zu gestalten, erweist sich jedoch als vergleichsweise komplex und aufwendig mit relativ hohem Bauteilbedarf.

Problematisch bei allen vorgenannten Druckluftversorgungsanlagen ist die noch verbesserungswürdige Anbindung einer Luftfederanlage an die Druckluftversorgungsanlage aufgrund des regelmäßig als Parallelschaltung ausgebildeten vorgenannten Abschnitts in einer Pneumatikhauptleitung.

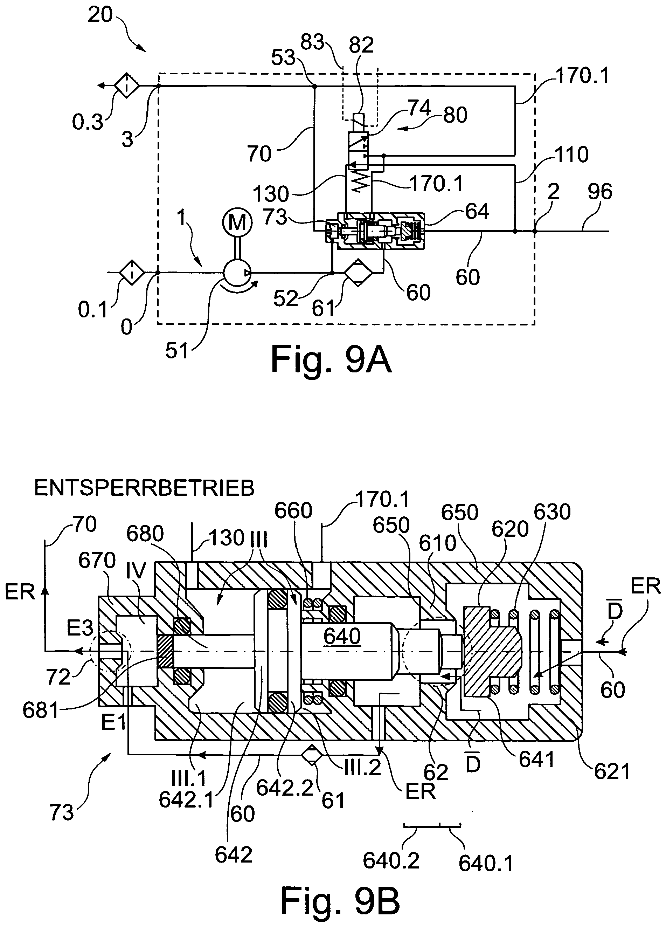

EP 1 243 447 A2 offenbart in Fig. 9 eine Niveauregelanlage mit einer Reihenanordnung eines ersten Wegeventils und eines zweiten Wegeventils in einer Galerie einer Pneumatikanlage, für die das zweite Wegeventil in der Druckluftleitung zwischen dem ersten steuerbaren Wegeventil und den Luftfedern angeordnet ist.

EP 1 380 453 B1 offenbart eine geschlossene Niveauregelanlage für Fahrzeuge, durch die ein Fahrzeugaufbau gegenüber mindestens einer Fahrzeugachse abgefedert ist und bei welcher ein Druckluftspeicher separat von einer Luftfederanlage durch ein 4/4- Wegeventil von einer Druckluftversorgungsanlage getrennt ist.

Auch diese pneumatischen Systeme sind noch verbesserbar. Insbesondere ist eine Druckluftanlage, wie sie in EP 1 165 333 B2 genannt ist, zu verbessern - letztere weist mangels eines Trennventils zwischen Druckluftversorgungsanlage und Pneumatikanlage den Nachteil auf, dass bei jeder Betriebsfunktion der Pneumatikanlage das Trocknervolumen mitbefüllt wird. Vor dem nächsten Regelvorgang muss dieses Volumen ganz oder teilweise entlüftet werden. Diese Luftenergie (Druck multipliziert mit dem Volumen) geht bei der Entlüftung verloren und muss vom Kompressor neu verdichtet werden; dies zeigt sich in einem nachteiligen Effizienzverlust der Druckluftversorgungsanlage.

Aus DE 35 42 974 A1 der Anmelderin ist eine mit Luftfiltern versehene Niveauregeleinrichtung mit einer eingangs genannten Druckluftversorgungsanlage für Fahrzeuge bekannt, mit der in Abhängigkeit von der Fahrzeugbelastung ein vorgegebener Abstand der Fahrzeugzelle von der Fahrzeugachse durch Auffüllen oder Entleeren der Luftfedern eingestellt werden kann. Die Einrichtung hat ein mit dem Druck in den Luftfedern steuerbares Sicherheitsventil und ein Trennventil zur Pneumatikanlage in Form eines ersten Rückschlagventils. Eine Regeneration des Lufttrockners ist bei einer solchen Anlage über eine Drossel und ein gegen eine Befüllrichtung zu öffnendes zweites Rückschlagventil möglich, das in einer Zweigleitung angeordnet ist.

Die Druckluftversorgungsanlage der DE 35 42 974 A1 hat sich seit langem bewährt, ist jedoch noch verbesserbar. Es hat sich gezeigt, dass die Anlage zwar vorteilhaft geeignet ist, auch bei einer Regeneration des Lufttrockners durch die Abtrennung von Druckluftversorgungsanlage und Pneumatikanlage mit dem ersten Rückschlagventil Druckluft zu sparen. Gleichwohl hat sich insbesondere für fortschrittliche Anwendungen, welche eine vergleichsweise flexible und schnelle Drucklufthandhabung in vergleichsweise kurzen Zeiträumen erforderlich machen, die in DE 35 42 974 A1 offenbarte Anlage der Anmelderin als begrenzt in ihren Möglichkeiten erwiesen.

An dieser Stelle setzt die Erfindung an, deren Aufgabe es ist, eine Druckluftversorgungsanlage und ein Verfahren zum Betreiben einer Pneumatikanlage anzugeben, die hinsichtlich des Standes der Technik verbessert ist, insbesondere eine verlässliche und dennoch flexible, gegebenenfalls schnelle Funktionsweise aufweist, wobei ein Lufttrockner vor ungünstigen Einflüssen geschützt sein soll. Insbesondere soll eine Druckluftversorgungsanlage vergleichsweise einfach aufgebaut sein und dennoch zum einen ein vergleichsweise schnelles Entlüften bei möglichst vorteilhafter Trocknerregeneration ermöglichen. Insbesondere soll auch eine Akustik der Druckluftversorgungsanlage verbessert sein. Aufgabe der Erfindung ist es ebenso, ein vorteilhaft gestaltetes pneumatisches System mit der Druckluftversorgungsanlage anzugeben.

Betreffend die Druckluftversorgungsanlage wird die Aufgabe durch die Erfindung mit einer Druckluftversorgungsanlage der eingangs genannten Art gelöst, bei der erfindungsgemäß die Merkmale des kennzeichnenden Teils des Anspruchs 1 vorgesehen sind.

Erfindungsgemäß ist eine Druckluftversorgungsanlage zum Betreiben einer Pneumatikanlage, insbesondere einer Luftfederanlage eines Fahrzeugs, vorgesehen, die aufweist:
- eine Druckluftzuführung,
- einen Druckluftanschluss zur Pneumatikanlage,
- einen Entlüftungsanschluss zur Umgebung,
- eine erste pneumatische Verbindung zwischen der Druckluftzuführung und dem Druckluftanschluss , die einen Lufttrockner und ein Trennventil aufweist,
- eine zweite pneumatische Verbindung zwischen dem Druckluftanschluss und dem Entlüftungsanschluss. Erfindungsgemäß ist vorgesehen, dass das Trennventil mit einem entsperrbaren Rückschlagventil gebildet ist. Insbesondere ist das Rückschlagventil pneumatisch entsperrbar. Grundsätzlich kann das Rückschlagventil je nach Bedarf auf zweckmäßige Weise entsperrbar sein. Vorzugsweise ist an das entsperrbare Rückschlagventil eine Entsperrleitung angeschlossen. Dies kann grundsätzlich je nach Bedarf eine zweckmäßig ausgebildete Steuerleitung sein, z. B. eine elektrische, magnetische oder pneumatische Steuerleitung, die geeignet ist, das Rückschlagventil derart anzusteuern, dass dieses entsperrt wird. Bevorzugt ist das Rückschlagventil pneumatisch entsperrbar und dazu an eine pneumatische Entsperrleitung geschlossen.

Vorzugsweise ist die erste pneumatische Verbindung als eine Pneumatikhauptleitung und die zweite pneumatische Verbindung als eine Entlüftungsleitung gebildet.

Die erste und zweite pneumatische Verbindung - also die Pneumatikhauptleitung und die Entlüftungsleitung - können separate Leitungen sein, die z. B. an einen gemeinsamen Druckzuführungsanschluss angeschlossen sind. Dieses Konzept bietet eine besonders vorteilhafte Grundlage für eine vergleichsweise schnelle Entlüftung. In einer alternativen Weiterbildung können die erste und zweite pneumatische Verbindung jedoch auch ganz oder teilweise zusammenfallen, d. h. die Pneumatikhauptleitung und die Entlüftungsleitung können in einer alternativen Weiterbildung auch dieselben Leitungen sein und sowohl zur Entlüftung als auch Belüftung einer Pneumatikanlage bidirektional durchströmbar sein.

Die Erfindung führt auf ein pneumatisches System des Anspruchs 17 mit einer erfindungsgemäßen Druckluftversorgungsanlage. Eine Druckluftversorgungsanlage wird vorteilhaft in einem pneumatischen System mit einer Pneumatikanlage, beispielsweise einer zuvor beschriebenen Luftfederanlage, mit Druckluft betrieben.

Vorteilhaft wird Druckluft im Rahmen eines Druckniveaus von 5 bis 20 bar, der Druckluftversorgungsanlage aus einer Druckluftzuführung zur Verfügung gestellt. Die Druckluft kann für die Druckluftzuführung insbesondere durch ein zwischen einer Luftzuführung und einem Druckluftzuführungsanschluss angeordneten Luftverdichter erzeugt werden. Die Druckluftzuführung ist zur Versorgung der Pneumatikanlage über eine erste pneumatische Verbindung mit einem Druckluftanschluss zur Pneumatikanlage verbunden. Die erste pneumatische Verbindung der eingangs genannten Druckluftversorgungsanlage weist vorteilhaft eine Pneumatikhauptleitung, insbesondere als einzige pneumatische Leitung, auf. Darüber hinaus weist die Druckluftversorgungsanlage der eingangs genannten Art eine mit der Pneumatikhauptleitung und einem Entlüftungsanschluss zur Umgebung pneumatisch verbundene zweite pneumatische Verbindung, vorteilhaft eine Entlüftungsleitung, mit einem steuerbaren Entlüftungsventil auf. Dadurch ist der Druckluftanschluss und/oder die Druckluftzuführung insbesondere über ein steuerbares Entlüftungsventil, mit einem Entlüftungsanschluss zur Umgebung pneumatisch verbunden. Mittels des steuerbaren Entlüftungsventils kann beispielsweise durch Ablassen von Luft die Druckluftversorgungsanlage, insbesondere zur Entlüftung der Pneumatikanlage, zum Entlüftungsanschluss hin entlüftet werden.

Die Erfindung geht von der Überlegung aus, dass eine vorteilhafte Gestaltung der ersten pneumatischen Verbindung zwischen der Druckluftzuführung und einem Druckluftanschluss zur Pneumatikanlage grundsätzlich eine Basis für eine verbesserte Trocknerregeneration und auch eine flexible und gegebenenfalls schnelle Entlüftung der Druckluftversorgungsanlage und/oder der Pneumatikanlage bzw. Belüftung derselben ermöglichen kann. Die Erfindung geht in einer Weiterbildung von der Überlegung aus, dass eine Pneumatikhauptleitung zur Darstellung der vorzugsweise einzigen pneumatischen Verbindung dazu vergleichsweise einfach ausgelegt werden kann, vorzugsweise mit einem einzigen entsperrbaren Rückschlagventil.

Die Erfindung geht weiter von der Überlegung aus, dass die in DE 35 42 974 A1 genannte Anlage unter Einsatz eines Rückschlagventils als Trennventil in der ersten pneumatischen Verbindung zur pneumatischen Entkopplung der Druckluftversorgungsanlage von einer Pneumatikanlage eine gute Grundlage bietet. Die Erfindung hat darüber hinaus jedoch erkannt, dass sich ein Entlüftungsvorgang - mit oder ohne Trocknerregeneration -flexibler und gegebenenfalls schneller ausführen lässt, wenn das Trennventil mit einem vorzugsweise pneumatisch entsperrbaren, vorzugsweise einzigen Rückschlagventil gebildet ist. Diese Erkenntnis nutzt zum einen die Vorteile eines vergleichsweise einfach zu realisierenden Rückschlagventils und bietet mit der pneumatischen Entsperrbarkeit des Rückschlagventils darüber hinaus ein besonders effektives Konzept einer Drucklufthandhabung, die schnell und flexibel ist. Die Erfindung vermeidet mit Vorteil, dass bei jeglicher Beschaltung einer Pneumatikanlage, z. B. mit einem einem Balg oder einem Speicher vorgeordneten Wegeventil, ein Lufttrockner mit Druckluft aus der Pneumatikanlage, insbesondere aus der Galerie derselben, befüllt wird. Die ggf. für eine Regeneration unvorteilhafte Druckluftbeaufschlagung des Lufttrockners wird durch das vorteilhaft pneumatisch entsperrbare Rückschlagventil vermieden. Das pneumatisch entsperrbare Rückschlagventil ist mit vergleichsweise geringem Schaltwiderstand in Befüllrichtung, d. h. in einer Richtung vom Lufttrockner zum Druckluftanschluss, passierbar. Mit anderen Worten ist das pneumatisch entsperrbare Rückschlagventil selbst in einem Sperrbetrieb in einer Befüllrichtung, d. h. in Richtung von der Druckluftzuführung zum Druckluftanschluss, praktisch pneumatisch offen. Das pneumatisch entsperrbare Rückschlagventil ist in einer entgegengesetzten Entlüftungsrichtung in einem Sperrbetrieb pneumatisch geschlossen, trennt also die erste pneumatische Verbindung zwischen der Druckluftzuführung und dem Druckluftanschluss, so dass die Pneumatikanlage von der Druckluftversorgungsanlage entkoppelt ist. Aufgrund der Entsperrbarkeit des Rückschlagventils ist dieses jedoch bei Bedarf von einem Sperrbetrieb in einen Entsperrbetrieb schaltbar, so dass - unabhängig von den Druckverhältnissen an Anschlüsse des entsperrbaren Rückschlagventils in der ersten pneumatischen Verbindung - die erste pneumatische Verbindung auch in einer Richtung von Druckluftanschluss zur Druckluftzuführung praktisch ungehindert von Druckluft durchströmbar ist, wenn das entsperrbare Rückschlagventil entsprechend angesteuert wird.

Genau dies erweist sich als vorteilhaft im Vergleich zur vorbekannten Druckluftversorgungsanlage, wie sie in DE 35 42 974 A1 beschrieben ist - eine Entlüftung einer Pneumatikanlage lässt sich vergleichsweise einfach auch über die erste pneumatische Verbindung realisieren, so dass ein vergleichsweise zeitaufwändiges und gegebenenfalls mit Druckverlust verbundenes umständliches Führen der Druckluft bei Entlüftung und/oder Trocknerregeneration über Zweigleitungen vermieden ist. Vielmehr bietet das Konzept der vorliegenden Erfindung darüber hinaus die vorteilhafte Möglichkeit, das entsperrbare Rückschlagventil im Hinblick auf verschiedenste Betriebsfunktionen der Druckluftversorgungsanlage auszulegen. Beispielsweise können in dem entsperrbaren Rückschlagventil in einer Weiterbildung auch Funktionsmittel vorgesehen sein, die als Entlüftungsventil in der zweiten pneumatischen Verbindung wirken können. Auch kann das pneumatisch entsperrbare Rückschlagventil mit geeigneten Öffnungsquerschnitten d. h. Nennweiten versehen werden, die - gegebenenfalls einstellbar - einer schnellen Entlüftung bei dennoch vorteilhafter Akustik und Trocknerregeneration dienlich sind.

Insbesondere ermöglicht es das Konzept der Erfindung, die Pneumatikhauptleitung zwischen der Druckluftzuführung und dem Druckluftanschluss gegen eine über den Druckluftanschluss zum Lufttrockner bzw. zum Entlüftungsanschluss geführte Druckluftströmung aus der Pneumatikanlage mit einem einzigen entsperrbaren Rückschlagventil zu sperren. Dies reduziert in besonders vorteilhafter Weise die Bauteilzahl, die üblicherweise für die Realisierung eines Trennventils in Form einer Trennventilanordnung von mehreren Ventilen erforderlich ist. Das Konzept der Erfindung hat erkannt, dass es grundsätzlich ausreichend ist, ein einziges entsperrbares Rückschlagventil zur Sperrung der Pneumatikhauptleitung vorzusehen.

Unter einem entsperrbaren Rückschlagventil ist vorliegend insbesondere ein Rückschlagventil zu verstehen, das in Öffnungsrichtung vom Lufttrockner zum Druckluftanschluss selbsttätig, d. h. praktisch nur gegen eine begrenzte Federkraft, öffnet. Ein solches entsperrbares Rückschlagventil fällt also praktisch von allein unter Einwirkung der Federkraft in Entlüftungsrichtung zu. Vorzugsweise ist unter einem entsperrbaren Rückschlagventil das zuvor genannte Rückschlagventil zu verstehen, dessen Sperrwirkung in Entlüftungsrichtung aufhebbar ist. Dies kann grundsätzlich je nach Bedarf mittels einer zweckmäßig ausgebildeten Steuerleitung erfolgen.

Bei einem Befüllvorgang einer Pneumatikanlage öffnet das entsperrbare Rückschlagventil praktisch selbsttätig, insbesondere auf pneumatischem Wege. Bei einem Entlüftungsvorgang sperrt dieses die Pneumatikhauptleitung, lässt sich aber mechanisch entsperren, wobei die entsprechende Mechanik, z. B eines Steuerkolbens oder sonstigen Betätigungselements, pneumatisch aktuiert sein kann. Mit anderen Worten ist bevorzugt das Rückschlagventil pneumatisch und/oder mechanisch entsperrbar.

Besonders bevorzugt ist beim Befüllvorgang vorgesehen, dass das entsperrbare Rückschlagventil unter Druckbeaufschlagung durch eine Druckluftströmung in Befüllrichtung, d. h. von der Druckluftversorgungsanlage zur Pneumatikanlage pneumatisch selbsttätig öffnet. Konkret kann der Steuerkolben eine erste, einem Sperrbetrieb zugeordnete Schaltstellung aufweisen, bei dem ein Sperrventilkörper vom Sperrventilsitz des entsperrbaren Rückschlagventils in einer Befüllrichtung selbsttätig -d. h. pneumatisch unter Druckbeaufschlagung- abhebbar ist. Konkret ist im Sperrbetrieb der Sperrventilkörper vorteilhaft federbelastet auf einem bzw. in Richtung eines Sperrventilsitzes gehalten, sodass dieser gegen Federkraft und unter Einwirkung einer Druckluft in Befüllrichtung, d. h. selbsttätig, vom Sperrventilsitz abhebbar ist.

Besonders bevorzugt wird beim Entlüften eine Druckluftströmung in Gegenrichtung zur Befüllrichtung, d. h. in Entlüftungsrichtung geführt, wobei mit einem von der Pneumatikhauptleitung abgeleiteten Druck über ein Steuerventil der Steuerkolben von der ersten Schaltstellung in eine zweite einem Entsperrbetrieb zugeordnete Schaltstellung pneumatisch überführt wird, und das entsperrbare Rückschlagventil mechanisch entsperrt, insbesondere den Sperrventilkörper vom Sperrventilsitz mechanisch abhebt. Im Entsperrbetrieb ist der Sperrventilkörper unter Wirkung des Steuerkolbens -d. h. mechanisch- vom Sperrventilsitz abgehoben und das so entsperrte Rückschlagventil kann in Entlüftungsrichtung durchströmt werden.

Die Erfindung führt auf ein Verfahren zum Betreiben einer Pneumatikanlage mittels einer Druckluftversorgungsanlage, nach Anspruch 19. Das Verfahren weist besonders vorteilhaft die Schritte auf:
- in Befüllrichtung - Befüllen der Pneumatikanlage mittels einer über eine Pneumatikhauptleitung, geführte Druckluftströmung aus der Druckluftversorgungsanlage , wobei ein entsperrbares Rückschlagventil in der Pneumatikhauptleitung selbsttätig öffnet;
- Halten des Drucks in der Pneumatikanlage, wobei die Pneumatikhauptleitung gegen eine Druckluftströmung aus der Pneumatikanlage mittels dem entsperrbaren Rückschlagventil gesperrt ist, und
- in Entlüftungsrichtung, also gegen die Befüllrichtung - Entlüften der Pneumatikanlage mittels der über die Pneumatikhauptleitung geführten Druckluftströmung aus der Pneumatikanlage, wobei das entsperrbare Rückschlagventil (63, 64) in der Pneumatikhauptleitung (60) entsperrt wird.

Insbesondere ist zur Durchführung des Verfahrens eine Druckluftversorgungsanlage nach einem der Ansprüche 1 bis 16 vorgesehen, aufweisend:
- eine Druckluftzuführung ,
- einen Druckluftanschluss zur Pneumatikanlage ,
- einen Entlüftungsanschluss zur Umgebung,
- die Pneumatikhauptleitung zwischen der Druckluftzuführung und dem Druckluftanschluss, die einen Lufttrockner und ein Trennventil aufweist,
- eine Entlüftungsleitung zwischen dem Druckluftanschluss und dem Entlüftungsanschluss. Vorteilhaft ist zur Durchführung des Verfahrens vorgesehen, dass ein Trennventil mit einem, insbesondere pneumatisch entsperrbaren, vorzugsweise einzigen Rückschlagventil gebildet ist, mittels dem
- die Pneumatikhauptleitung gegen eine über den Druckluftanschluss und den Lufttrockner, insbesondere zum Entlüftungsanschluss geführte Druckluftströmung aus der Pneumatikanlage in einem ersten Betriebszustand gesperrt wird, und
- in einem zweiten Betriebszustand das insbesondere pneumatisch entsperrbare Rückschlagventil entsperrt wird und die Pneumatikanlage über eine über den Druckluftanschluss und den Lufttrockner, insbesondere zum Entlüftungsanschluss geführte Druckluftströmung aus der Pneumatikanlage entlüftet wird.

Vorteilhaft weist das Verfahren weiter den Schritt auf:
- Entsperren des Rückschlagventils mit einem von der Pneumatikhauptleitung abgeleiteten Druck. Ein derartiges pneumatisches Steuersignal lässt sich vergleichsweise einfach realisieren und hat sich besonders bewährt. Es kann aber auch grundsätzlich jedes andere Steuersignal genutzt werden. In einer Abwandlung kann das Rückschlagventil alternativ oder zusätzlich durch eine elektrisches oder magnetisches Steuersignal entsperrt werden.

In einer besonders bevorzugten Weiterbildung erlaubt es das Konzept der Erfindung, ein Steuerventil sowie eine pneumatische Entsperrleitung zwischen dem Steuerventil und einem als pneumatisches Entsperrventil ausgebildeten Rückschlagventil vorzusehen. Vorzugsweise kann das Steuerventil wenigstens zum Entsperren des Rückschlagventils ausgebildet sein. Als besonders vorteilhaft hat sich ein Steuerventil erwiesen, das einzig und allein zur Entsperrung des Rückschlagventils und zur insbesondere gleichzeitigen Steuerung eines Entlüftungsventils ausgebildet ist. Vorzugsweise wird über das Steuerventil mit einem von der Pneumatikhauptleitung über die pneumatische Steuerleitung abgeleiteten Druck das Rückschlagventil unter Druckbeaufschlagung der pneumatischen Entsperrleitung entsperrt. Insbesondere hat es sich als vorteilhaft erwiesen gleichzeitig ein Entlüftungsventil in der Entlüftungsleitung zur Entlüftung anzusteuern, d. h. zum Öffnen zu veranlassen.

Im Rahmen einer besonders bevorzugten Weiterbildung des erfindungsgemäßen Verfahrens ist vorgesehen, dass die Druckluftversorgungsanlage ein Steuerventil, eine pneumatische Steuerleitung zwischen der Pneumatikhauptleitung und dem Steuerventil und, eine pneumatische Entsperrleitung zwischen dem Steuerventil und dem Rückschlagventil aufweist. Insbesondere ist darüber hinaus in der Entlüftungsleitung ein Entlüftungsventil vorgesehen. Im Rahmen einer bevorzugten Weiterbildung des Verfahrens ist vorgesehen, dass über das Steuerventil mit einem von der Pneumatikhauptleitung über die pneumatische Steuerleitung abgeleiteten Druck das Rückschlagventil unter Druckbeaufschlagung der pneumatischen Entsperrleitung entsperrt wird. Insbesondere wird gleichzeitig das Entlüftungsventil in der Entlüftungsleitung gesteuert, insbesondere vorliegend geöffnet. Dies hat den Vorteil, dass unter Ansteuerung eines einzigen Steuerventils das Rückschlagventil gleichzeitig beidseitig geöffnet wird, so dass unter Entsperrung desselben die Druckluftströmung aus der Pneumatikanlage dem Entlüftungsanschluss zugeführt werden kann.

Im Rahmen einer besonders bevorzugten konstruktiven Realisierung ist das entsperrbare Rückschlagventil in Baueinheit mit dem Entlüftungsventil gebildet. Diese Weiterbildung ist ganz besonders kompakt und besonders effizient und zeiteffektiv beim Entlüften.

Solche und andere vorteilhafte Weiterbildungen der Erfindung - u. a. auch hinsichtlich der Konstruktion des pneumatisch entsperrbaren Rückschlagventils - sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Es hat sich als besonders vorteilhaft erwiesen, dass das pneumatisch entsperrbare Rückschlagventil zwischen dem Lufttrockner und dem Druckluftanschluss zur Pneumatikanlage in der ersten und/oder zweiten pneumatischen Verbindung angeordnet ist. Insbesondere ist das pneumatisch entsperrbare Rückschlagventil in einer die erste pneumatische Verbindung vorteilhaft bildenden pneumatischen Hauptleitung angeordnet, d. h. vorteilhaft in der pneumatischen Hauptleitung selbst. Eine vergleichsweise aufwändige Konstruktion einer Zweigleitung oder Parallelleitung zur Pneumatikhauptleitung mit einer erhöhten Bauteil- und Ventilzahl ist so vorteilhaft vermieden. Die Pneumatikhauptleitung ist vorteilhaft die einzige pneumatische Leitung der ersten pneumatischen Verbindung und verläuft zwischen der Druckluftzuführung und einem Druckluftanschluss zur Pneumatikanlage. In der Pneumatikhauptleitung ist vorteilhaft die Druckluftzuführung, der Lufttrockner, das pneumatisch entsperrbare Rückschlagventil und der Druckluftanschluss zur Pneumatikanlage in der genannten Reihenfolge in Belüftungsrichtung angeordnet.

Wie weiter unten erläutert, kann das vorzugsweise pneumatisch entsperrbare Rückschlagventil wenigstens teilweise - d. h. vorzugsweise mit einem Funktionsmittel, das zur Bildung eines Entlüftungsventils im Rückschlagventil dient - in der zweiten pneumatischen Verbindung angeordnet sein. Vorzugsweise ist das genannte Funktionsmittel zur Bildung eines Entlüftungsventils mit dem Rückschlagventil in einem einzigen entsperrbaren Rückschlagventil realisiert, d. h. insbesondere in einem einzigen Ventilgehäuse integriert.

Das pneumatisch entsperrbare Rückschlagventil kann grundsätzlich in unterschiedlicher Form ganz allgemein als Sperrventil realisiert sein, wie beispielsweise als Rückschlagventil, als Drosselrückschlagventil, als Wechselventil, Zweidruckventil oder Schnellentlüftungsventil. Als besonders vorteilhaft hat sich ein Trennventil mit einer Drossel und dem Rückschlagventil in einer pneumatischen Reihenschaltung in der ersten pneumatischen Verbindung, d. h. vorteilhaft in der Pneumatikhauptleitung, erwiesen. Vorteilhaft ist dazu in der Pneumatikhauptleitung das entsperrbare Rückschlagventil der Drossel in Befüllrichtung pneumatisch in Reihe nachgeschaltet; bei Befüllung der Pneumatikanlage wird also zunächst die Drossel und dann das entsperrbare Rückschlagventil durchströmt.

Alternativ oder zusätzlich kann das Trennventil auch das Rückschlagventil in Form eines Drosselrückschlagventils aufweisen.

Beide vorgenannten Weiterbildungen sehen insbesondere die Kombination eines Rückschlagventils mit einer - vorteilhaft einstellbaren - Drossel vor. Die - vorteilhaft einstellbare - Drossel oder eine vorteilhaft vorgesehene Abfolge von - gegebenenfalls unterschiedlichen - Drosselmitteln, wie beispielsweise Öffnungsnennweiten oder dgl. im Rückschlagventil, können zweckmäßig zu einer optimierten Auslegung einer Druckwechselamplitude für eine Trocknerregeneration genutzt werden. Eine verbesserte Trocknerregeneration des Lufttrockners zeichnet sich aufgrund einer optimierten Druckwechselamplitude aus, wobei mit steigender Druckwechselamplitude auch die Regenerationsfähigkeit des Lufttrockners ansteigt. Je höher der Druckverlust einer Druckluft in Entlüftungsrichtung ist, desto höher ist das Potenzial zur Aufnahme von im Lufttrockner gehaltener Feuchte bei Regeneration des Lufttrockners. Auch lässt sich durch diese Weiterbildung eine Entlüftung besonders effizient bzw. vergleichsweise zügig umsetzen.

Im Rahmen einer mit besonderem Vorteil versehenen Weiterbildung weist die Druckluftversorgungsanlage weiter auf:
- ein Steuerventil,
- eine pneumatische Steuerleitung zwischen der ersten pneumatischen Verbindung und dem Steuerventil,
- insbesondere eine pneumatische Entsperrleitung zwischen dem Steuerventil und dem Rückschlagventil, wobei
- über das Steuerventil mit einem von der ersten pneumatischen Verbindung über die pneumatische Steuerleitung abgeleiteten Druck das Rückschlagventil, insbesondere unter Druckbeaufschlagung der pneumatischen Entsperrleitung, entsperrbar ist.

In dieser Weiterbildung wird in der Druckluftversorgungsanlage ein Steuerventil zum Entsperren des entsperrbaren Rückschlagventils vorgesehen. Das pneumatische Steuerventil ist vorteilhaft als ein, insbesondere 3/2-Kammer-Wegeventil gebildet, insbesondere als ein Magnetventil. Die von der ersten pneumatischen Verbindung, insbesondere einer Pneumatikhauptleitung, abgehende pneumatische Steuerleitung kann das Steuerventil derart mit Druck beaufschlagen, dass -bei Schalten des Steuerventilsüber eine Steuerleitung oder dgl. die Druckbeaufschlagung, insbesondere über die pneumatische Entsperrleitung, an eine Steuerkammer weitergegeben wird, um das Rückschlagventil zu entsperren.

Dieser Aufbau hat sich als vorteilhaft erwiesen, insbesondere weil das pneumatische Steuerventil nicht nur zum Entsperren des Rückschlagventils genutzt werden kann, sondern darüber hinaus auch zur Ansteuerung eines Entlüftungsventils in der zweiten pneumatischen Verbindung zwischen Druckluftanschluss und Entlüftungsanschluss, wie dies weiter unten erläutert ist. Dies führt dazu, dass über ein einziges Steuerventil der Lufttrockner bei Entlüftung und Regeneration beidseitig geöffnet werden kann, nämlich einerseits durch Entsperren des Rückschlagventils und anderseits durch off nen des Entlüftungsventils.

In einer ersten Variante kann das Entlüftungsventil separat vom Rückschlagventil gebildet sein. In einer anderen Variante kann -wie weiter unten erläutert- ein Entlüf tungsventil in Baueinheit mit dem Rückschlagventil realisiert sein. Insbesondere im letztgenannten Fall lässt sich das Steuerventil besonders vorteilhaft zusammen mit der Baueinheit in einer Druckluftversorgungsanlage anordnen.

Insbesondere auf beide Varianten Bezug nehmend ergeben sich vorteilhafte konstruktive Weiterbildungen des entsperrbaren Rückschlagventils wie folgt.

Besonders vorteilhaft weist das Rückschlagventil einerseits auf:
- eine mit der ersten pneumatischen Verbindung pneumatisch verbundene Sperrkammer,
- eine mit der ersten pneumatischen Verbindung pneumatisch verbindbare Durchflusskammer, und
- einen Sperrventilsitz zwischen Sperrkammer und Durchflusskammer sowie
- einen den Sperrventilsitz im Sperrbetrieb abschließenden und im Entsperrbetrieb freigebenden Sperrventilkörper.

Vorteilhaft wird im Entsperrbetrieb zwischen Sperrventilsitz und Sperrventilkörper eine geeignete Drossel für eine Druckluftströmung gebildet.

Anderseits weist das entsperrbare Rückschlagventil gemäß dieser Weiterbildung vorteilhaft eine mit der pneumatischen Entsperrleitung pneumatisch verbundene Steuerkammer auf, die von der Durchflusskammer pneumatisch getrennt ist und mittels der ein auf den Sperrventilkörper wirkender Steuerkolben aktuierbar ist. Mit Vorteil versehen löst eine Druckbeaufschlagung der Steuerkammer mit Druckluft oder dgl. Druckfluid eine Aktuierung des Steuerkolbens pneumatisch aus. Der Steuerkolben ist vorteilhaft gegen eine Federkraft aktuierbar. Dies hat den Vorteil, dass bei nicht druckbeaufschlagter Steuerkammer ein schaltendes Einwirken des Steuerkolbens auf den Sperrventilkörper nicht erfolgen kann bzw. der Steuerkolben von dem Sperrventilkörper beabstandet ist. Eine Druckbeaufschlagung der Steuerkammer hat zur Aktuierung des Steuerkolbens mit einer Druckamplitude zu erfolgen, die groß genug ist, um den Steuerkolben gegen die Federkraft derart zu bewegen, dass dieser auf den Sperrventilkörper wirken kann.

Ein grundsätzlich, beispielhaft aus DE 42 34 626 C2, bekanntes entsperrbares Rückschlagventil ist insbesondere hinsichtlich seiner Anbindung an die Druckluftversorgungsanlage verbessert. In Weiterbildung der Druckluftversorgungsanlage ist eine Steuerkammer des Rückschlagventils mittels einer am Steuerkolben angeordneten Trenndichtung pneumatisch aufgeteilt in einen mit der pneumatischen Entsperrleitung pneumatisch verbundenen Steuerraum und in einen mit der pneumatischen Entsperrleitung pneumatisch verbundenen Entlüftungsraum. Der Steuerkolben weist dazu vorteilhaft einen die Trenndichtung tragenden Ringwulst auf. Der Ringwulst hat bevorzugt eine dem Entlüftungsraum zugewandte zweite Seite und eine dem Steuerraum zugewandte erste Seite, wobei eine entlüftungsraumseitige Fläche der zweiten Seite kleiner als eine steuerraumseitige Fläche der ersten Seite ist. Anders ausgedrückt hat der Ringwulst vorteilhaft auf seiner dem Steuerraum zugewandten Seite ein größeres druckbeaufschlagbares Flächenmaß als auf seiner dem Entlüftungsraum zugewandten Seite.

In einer ersten Abwandlung des pneumatisch entsperrbaren Rückschlagventils sieht die Steuerkammer zusätzlich zum Steuerraum einen Entlüftungsraum vor, welcher - aufgrund seiner pneumatischen Verbindung mit der pneumatischen Entsperrleitung - zusätzlich zur beschleunigten Aktuierung des Steuerkolbens genutzt wird. Der Steuerraum der Steuerkammer ist mit dem Entlüftungsraum der Steuerkammer pneumatisch verbindbar, so dass bei Aktuierung des Steuerkolbens in Folge der Bewegung des Ringwulstes mit der Trenndichtung -ähnlich dem Prinzip kommunizierender Röhrenim Entlüftungsraum enthaltene Druckluft dem Steuerraum zugeführt wird und so die Aktuierung des Steuerkolbens durch Kraftdifferenz beschleunigt. Dies erfolgt sofern der Steuerraum ein niedrigeres Druckniveau aufweist. Dieses wiederum kann durch die zeitliche Abfolge der Öffnung des Entlüftungsventiles sichergestellt werden, da dadurch zunächst ein Druckniveau in der Durchflusskammer gesenkt wird.

In einer zweiten, ebenfalls vorteilhaften Abwandlung der Druckluftversorgungsanlage hinsichtlich des entsperrbaren Rückschlagventils, ist ein Entlüftungsraum der Steuerkammer zusätzlich oder alternativ mit der zweiten pneumatischen Verbindung oder der Umgebung -direkt oder indirekt- pneumatisch verbunden. Insbesondere lässt sich eine Verbindung mit der zweiten pneumatischen Verbindung über eine pneumatische Zweigleitung zwischen Steuerventil und Entlüftungsanschluss realisieren. In dieser Abwandlung ist das entsperrbare Rückschlagventil aufgrund des über das Steuerventil mit dem Entlüftungsanschluss verbundenen Entlüftungsraums mit einer separaten Entlüftungsfunktion versehen.

Ganz allgemein hat es sich als vorteilhaft erwiesen, dass die Druckluftversorgungsanlage in der zweiten pneumatischen Verbindung wenigstens ein -separates oder in Baueinheit mit dem Rückschlagventil realisiertes- steuerbares Entlüftungsventil aufweist.

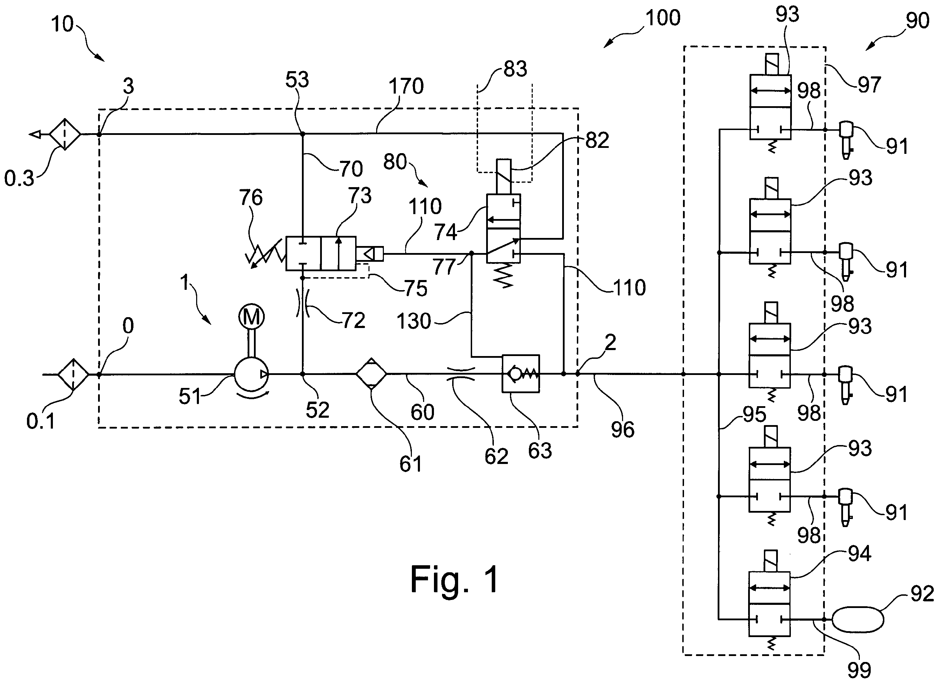

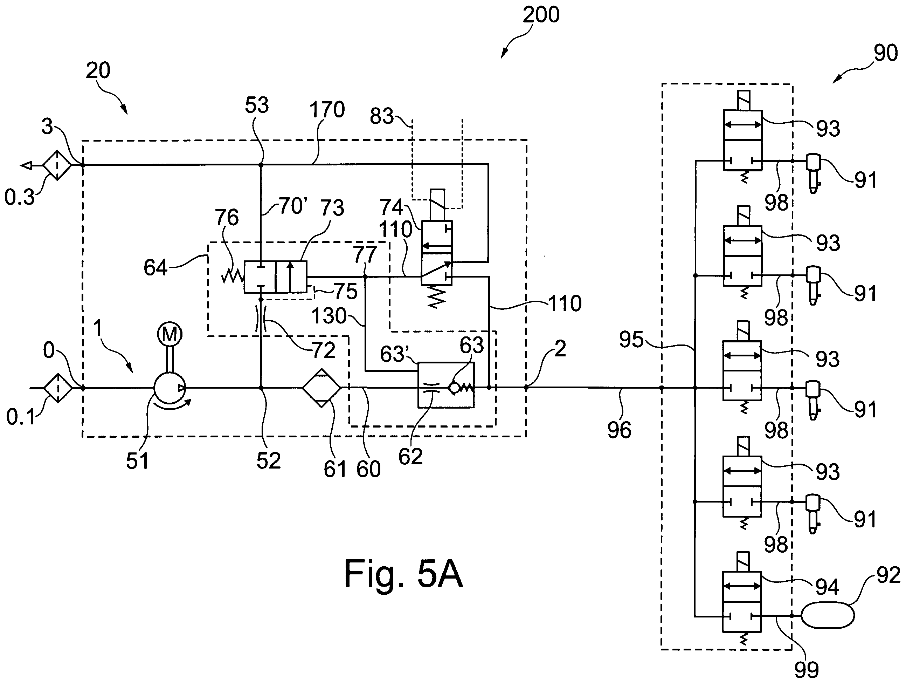

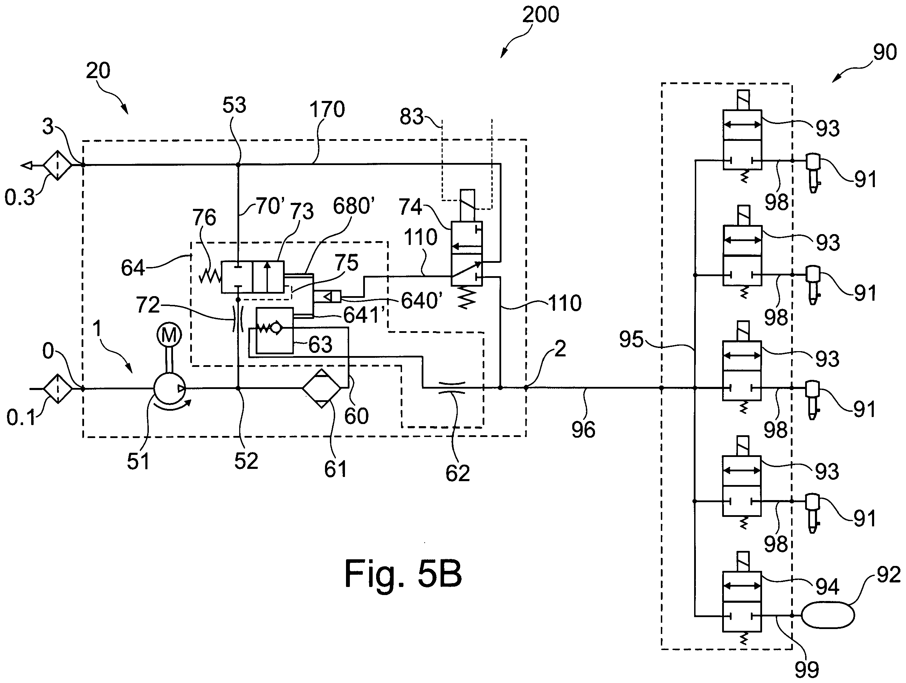

Die vorgenannten Weiterbildungen des entsperrbaren Rückschlagventils eignen sich in besonders vorteilhafter Weise zur Einbindung in einer Druckluftversorgungsanlage, welche ein separat von dem entsperrbaren Rückschlagventil gebildetes steuerbares Entlüftungsventil aufweist. Ob als separates Entlüftungsventil oder-besonders bevorzugt zur verbesserten Entlüftung- in Baueinheit mit dem Rückschlagventil hat es sich als vorteilhaft erwiesen, dass das steuerbare Entlüftungsventil als indirekt geschaltetes Relaisventil Teil einer Magnetventilanordnung zur indirekten Schaltung eines Druckluftvolumens ist. Dabei weist die Magnetventilanordnung ein einem von der ersten pneumatischen Verbindung über eine pneumatische Steuerleitung abgeleiteten Druck ausgesetztes Steuerventil zur pneumatischen Steuerung des Relaisventils auf. Eine in dieser Weiterbildung mit separatem Entlüftungsventil realisierte besonders bevorzugte Ausführungsform einer Druckluftversorgungsanlage ist in Fig. 1 bis Fig. 4 beschrieben. Die Magnetventilanordnung kann in einer vergleichsweise kompakten Bauform realisiert sein. In einer darüber hinaus besonders bevorzugten Abwandlung ist das Entlüf tungsventil in Baueinheit mit dem Trennventil gebildet. Solche auf diese Weiterbildung ausgelegte Ausführungen einer Druckluftversorgungsanlage sind in den weiteren Fig. 5A, Fig. 5B bis Fig. 10 in der Zeichnung im Detail beschrieben. Das Konzept der Erfindung ist nicht beschränkt auf die Realisierung der Druckluftversorgungsanlage mit einer Magnetventilanordnung aus einem steuerbaren Entlüftungsventil als indirekt geschaltetes Relaisventil und einem Steuerventil. Vielmehr eignet sich das Konzept der Erfindung auch im Rahmen eines nicht weiter beschriebenen, jedoch ebenso geeigneten steuerbaren Entlüftungsventils als direkt geschaltetes Ventil, das Teil einer Magnetventilanordnung zur direkten Schaltung eines Druckluftvolumens ist. Eine solche Magnetventilanordnung ist vorteilhaft frei von einem Steuerventil.

Es können in einer bevorzugten Weiterbildung als Entlüftungsventil ein einziges Ventil oder mehrere Ventile einer Magnetventilanordnung, insbesondere ein Primärventil und Sekundärventil eines Doppelanker-Magnetmagnets, vorgesehen sein. Diese können parallel oder in Reihe geschaltet, stromlos offen oder geschlossen sein - dies in beliebiger Kombination. Eine Reihenanordnung und Parallelanordnung des Primär- und Sekundärventils eignet sich für eine besonders flexibel gestaltbare zeitliche Schaltungsabfolge des Primär- und Sekundärventils. Vorteilhaft können dadurch unterschiedliche Nennweiten zu unterschiedlichen Zeitpunkten für die Entlüftungsleitung zur Verfügung gestellt werden. Dadurch können Druckspitzen bei einer Entlüftung und so die Akustik vermindert, insbesondere ein Entlüftungsknall vermieden werden. Eine Parallelanordnung hat sich zusätzlich als besonders vorteilhaft für eine schrittweise Erhöhung der für die Entlüftungsleitung zur Verfügung stehenden Nennweiten erwiesen, so dass eine besonders schnelle Entlüftung dennoch unter Vermeidung eines Entlüf tungsknalls erfolgen kann. Eine übermäßige Akustik bzw. ein Entlüftungsknall ist bei einem Entlüftungsvorgang immer dann zu befürchten, wenn ein zu großes Druckluftvolumen in zu kurzer Zeit, d. h. bei zu hoher Druckamplitude entlüftet wird. Andererseits ist für eine bestmögliche Regeneration des Lufttrockners eine vergleichsweise hohe Druckwechselamplitude erwünscht. Gesteigerte Effizienz hinsichtlich Entlüftung und Trocknerregeneration einerseits und eine geräuscharme Arbeitsweise andererseits können somit gegenläufige Bedingungen haben. Das zuvor beschriebene Konzept der Erfindung realisiert einen besonders vorteilhaften Kompromiss zwischen Trocknerregeneration und Entlüftungseffizienz einerseits und Akustik andererseits.

Die hier beschriebenen vorgenannten, besonders bevorzugten Weiterbildungen bieten darüber hinaus grundsätzlich die vorteilhafte Möglichkeit, dass das Steuerventil der Magnetventilanordnung und das Steuerventil der pneumatischen Steuerleitung dasselbe Steuerventil ist. Dazu ist das Steuerventil in der pneumatischen Steuerleitung angeordnet und zur pneumatischen Steuerung eines Entlüftungsventils und/oder Rückschlagventils ausgebildet.

In besonders bevorzugter konstruktiver Realisierung lässt sich das Rückschlagventil bei einer Druckluftversorgungsanlage wie folgt weiterbilden. Vorteilhaft weist das Rückschlagventil anderseits eine mit der zweiten pneumatischen Verbindung pneumatisch verbindbare Entlüftungskammer auf. Dazu ist insbesondere ein Entlüftungsventilsitz zwischen Entlüftungskammer und der zweiten pneumatischen Verbindung sowie ein den Entlüftungsventilsitz im Sperrbetrieb abschließender und im Entsperrbetrieb freigebender Entlüftungsventilkörper vorgesehen. Vorteilhaft ist der Entlüftungsventilkörper anderseits einer Trenndichtung eines Steuerkolbens, insbesondere einstückig mit dem Steuerkolben, gebildet.

Insbesondere ist vorgesehen, dass der Entlüftungsventilkörper mit dem Steuerkolben einen einstückigen Stößel bildet. Der Stößel hat bevorzugt eine Länge, die geringer ist als ein Abstand zwischen einem Entlüftungsventilsitz der Entlüftungskammer und einem Sperrventilsitz der Sperrkammer. Eine akustisch besonders bevorzugte Hochdruck-Entlüftungs-Funktion kann so vorteilhaft kompakt realisiert werden, die sonst zusätzlich über ein separates Hochdruckentlüftungsventil realisiert werden müsste. Die Weiterbildung sieht vor, dass -erst wenn nach Öffnen des Entlüftungsventilsitzes und Freigeben des Eintritts der Entlüftungskammer ein Druck im Lufttrockner weit genug gesunken ist- die Kraft des Steuerkolbens ausreicht, um im Rückschlagventil den Austritt am Sperrventilsitz ebenfalls zu öffnen, indem dieser den Sperrventilkörper vom Sperrventilsitz hebt. Bevorzugt ist die Länge des Stößels dazu größer als ein Abstand zwischen dem Sperrventilsitz der Sperrkammer und einem Eintritt der Entlüftungskammer.

Im Rahmen der vorgenannten konstruktiven Weiterbildung ist es in besonders vorteilhafter Weise möglich, bei einem Entsperrbetrieb des entsperrbaren Rückschlagventils gleichzeitig - nämlich unter Aktuierung des Steuerkolbens zusammen mit dem Entlüftungsventilkörper - einen Lufttrockner beidseitig zu öffnen; nämlich durch Öffnen des Sperrventilsitzes einerseits und anderseits durch Öffnen des Entlüftungsventilsitzes. Ein vorteilhaft in Baueinheit realisierter Steuerkolben und Entlüftungsventilkörper öffnet also bei Aktuierung einerseits das in Baueinheit mit dem Trennventil gebildete Entlüftungsventil und entsperrt anderseits das als Rückschlagventil gebildete Trennventil. Diese Baueinheit hat sich nicht nur als besonders kompakt erwiesen, sondern darüber hinaus wird eine separate Relaisventilfunktion eines Relaisventils der Magnetventilanordnung gemäß der zuvor erläuterten Variante vorteilhaft in das Trennventil integriert.

Ob mit oder ohne Entlüftungsventil kann das entsperrbare Rückschlagventil in der konstruktiven Ausführung genutzt werden, um geeignete Drosselquerschnitte - sowohl für eine Drossel in der ersten pneumatischen Verbindung als auch für eine Drossel in der zweiten pneumatischen Verbindung - auszubilden. Als besonders vorteilhaft hat sich die Realisierung des Steuerkolbens an seinem dem Sperrventilkörper zugewandten Ende mittels ab stufenweise gegeneinander abgesetzten unterschiedlichen Querschnitten erwiesen. So kann je nach Stellung des Steuerkolbens mit einem der Stufenweise abgesetzten Querschnitte in einer Nennweite des Sperrventilsitzes im Entsperrbetrieb eine von der Stellung des Steuerkolbens abhängige effektive Nennweite im Sperrventilsitz realisiert werden.

Zusätzlich oder alternativ können die Sperrkammer, die Durchflusskammer, die Steuerkammer und/oder die Entlüftungskammer des entsperrbaren Rückschlagventils Einlass und Auslass Nennweiten aufweisen, die eine Drosselfunktion für eine Druckluftströmung ausführen.

Die vorgenannten Weiterbildungen eignen sich vor allem zur Ausbildung einer Druckluftversorgungsanlage in Form einer Einrichtung mit einer Gehäuseanordnung, die eine Anzahl von Bereichen aufweist. In einem ersten Gehäusebereich kann ein Antrieb und/oder in einem zweiten Bereich ein vom Antrieb antreibbarer Luftverdichter und/oder in einem mit dem zweiten Bereich über eine Druckquellen-Schnittstelle verbundenen dritten Bereich der Lufttrockner und das Trennventil gebildet sein. Bei einer solchen Einrichtung lässt sich das pneumatisch entsperrbare Rückschlagventil mit Vorteil versehen im Lufttrockner des dritten Bereichs unterbringen. Als besonders vorteilhaft hat sich eine Anordnung des Steuerventils in einer durch eine Wandung des Trockenbehälters gebildeten Einbuchtung des Trockenbehälters erwiesen. Darüber hinaus hat sich die Anordnung des pneumatisch entsperrbaren Rückschlagventils, insbesondere in Baueinheit mit dem Entlüftungsventil, in einem Deckel des dritten Bereichs der Gehäuseanordnung als vorteilhaft erwiesen.

Die Erfindung führt mit Vorteil versehen auf ein pneumatisches System mit der Druckluftversorgungsanlage und einer Pneumatikanlage. Die Pneumatikanlage ist vorteilhaft in Form einer Luftfederanlage gebildet, die eine Galerie und wenigstens eine an die Galerie pneumatisch angeschlossene Zweigleitung mit mindestens einem Balg und optional einem Speicher aufweist. Vorteilhaft ist dem Balg und optional dem Speicher ein Wegeventil vorgeordnet. Die Auslegung des Wegeventils eignet sich - vor allem im Rahmen eines Magnetventils - als 2/2-Wegeventil. Solche oder andere Wegeventile lassen sich besonders vorteilhaft in einem Ventilblock mit mehreren Ventilen konstruktiv realisieren.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 ein Schaltbild eines pneumatischen Systems mit einer besonders bevorzugten Ausführungsform einer Druckluftversorgungsanlage gemäß einer ersten Variante der Erfindung, bei welcher das Entlüftungsventil als indirekt geschaltetes Relaisventil Teil einer Magnetventilventilanordnung zur indirekten Schaltung eines Druckluftvolumens in einer Entlüftungsleitung der zweiten pneumatischen Verbindung ist und wobei die Magnetventilanordnung ein einem Druck der mit einer Pneumatikhauptleitung gebildeten ersten pneumatischen Verbindung ausgesetztes Steuerventil zur Steuerung des Relaisventils und des pneumatisch entsperrbaren Rückschlagventils aufweist;

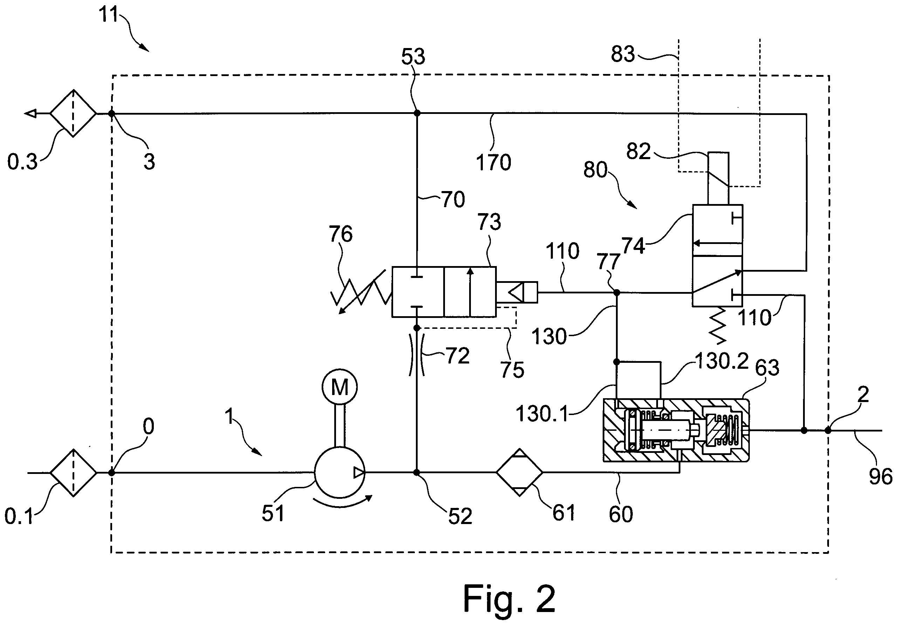

Fig. 2 ein Schaltbild eines pneumatischen Systems mit einer abgewandelten Ausführungsform einer Druckluftversorgungsanlage, bei welcher das entsperrbare Rückschlagventil einen mit einer pneumatischen Entsperrleitung pneumatisch verbundene Steuerkammer aufweist, wobei ein Steuerraum und ein Entlüftungsraum der Steuerkammer pneumatisch kommunizierend verbunden sind;

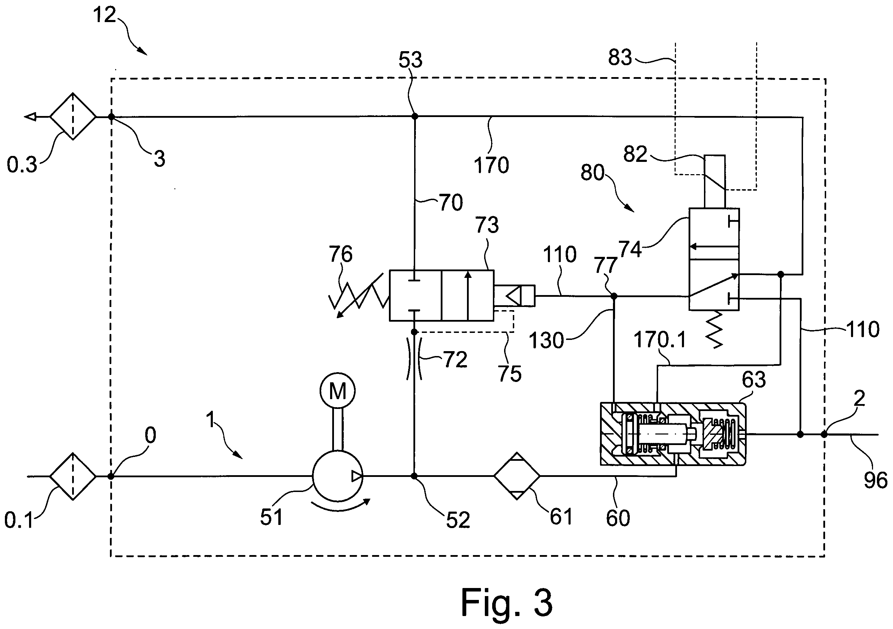

Fig. 3 ein Schaltbild eines pneumatischen Systems mit einer weiteren abgewandelten Ausführungsform einer Druckluftversorgungsanlage, bei welcher das entsperrbare Rückschlagventil einen mit einer pneumatischen Entsperrleitung pneumatisch verbundenen Steuerraum einer Steuerkammer und einen mit der Entlüftungsleitung der zweiten pneumatischen Verbindung pneumatisch verbundenen Entlüftungsraum einer Steuerkammer des Rückschlagventils aufweist;

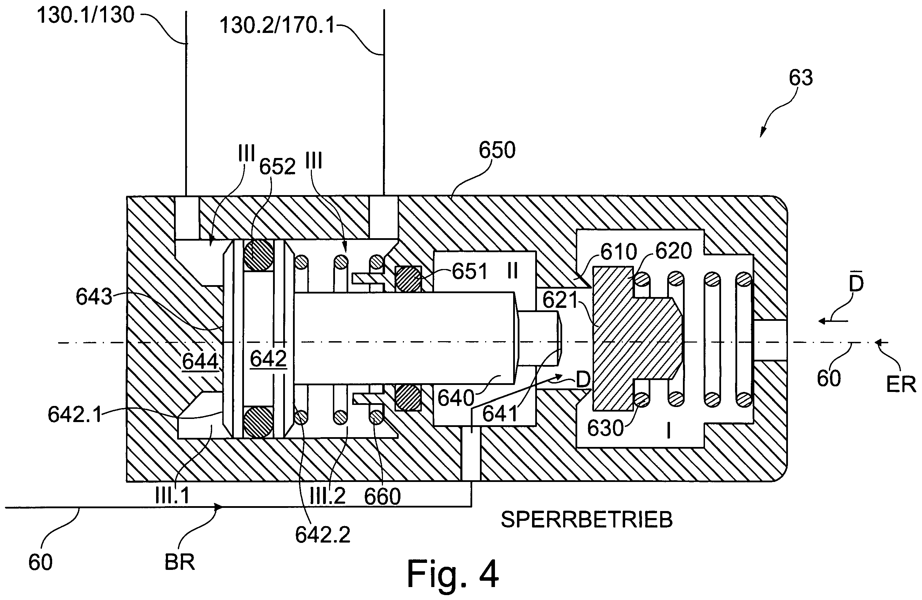

Fig. 4 zeigt eine besonders bevorzugte konstruktiv realisierte Ausführungsform eines pneumatischen Rückschlagventils wie es bei Druckluftversorgungsanlagen der Fig. 1 bis Fig. 3 bevorzugt einsetzbar ist;
Fig. 5A ein Schaltbild eines pneumatischen Systems mit einer besonders bevorzugten Ausführungsform einer Druckluftversorgungsanlage gemäß einer zweiten Variante der Erfindung, bei welcher das Entlüftungsventil in einer als Entlüftungsleitung gebildeten zweiten pneumatischen Verbindung in Baueinheit mit dem entsperrbaren Rückschlagventil in einer als Pneumatikhauptleitung gebildeten ersten pneumatischen Verbindung gebildet ist - über das gleiche Steuerventil ist das Rückschlagventil pneumatisch entsperrbar während gleichzeitig das Entlüftungsventil pneumatisch vorgesteuert zu Öffnen ist
Fig. 5B ein Schaltbild eines abgewandelten pneumatischen Systems ganz ähnlich dem der Fig.5A, wobei ein Betätigen des Rückschlagventils zum Entsperren desselben und des Entlüftungsventils zum Öffnen desselben über einen pneumatisch vom Steuerventil gesteuerten Doppelrelaiskolben erfolgt;

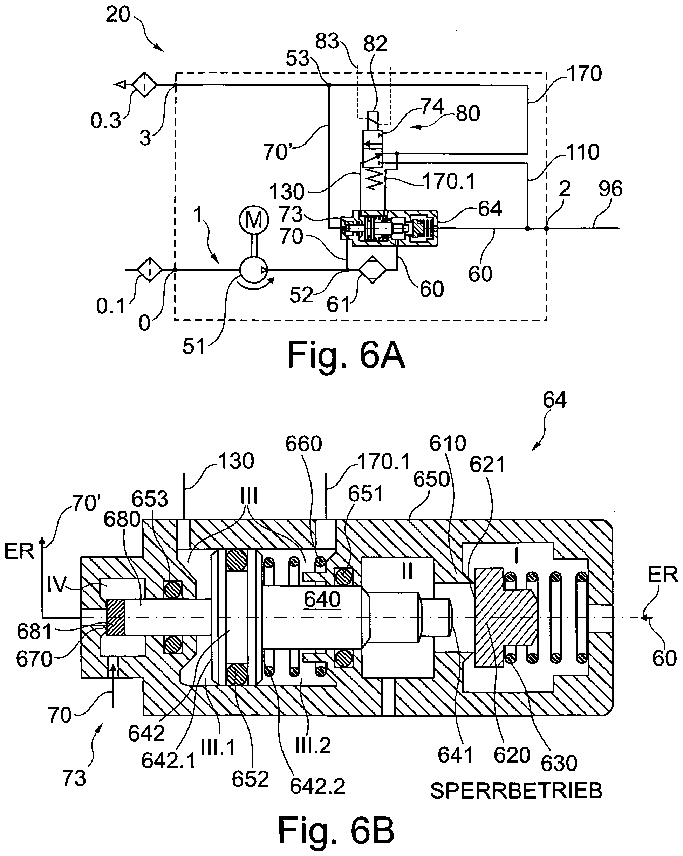

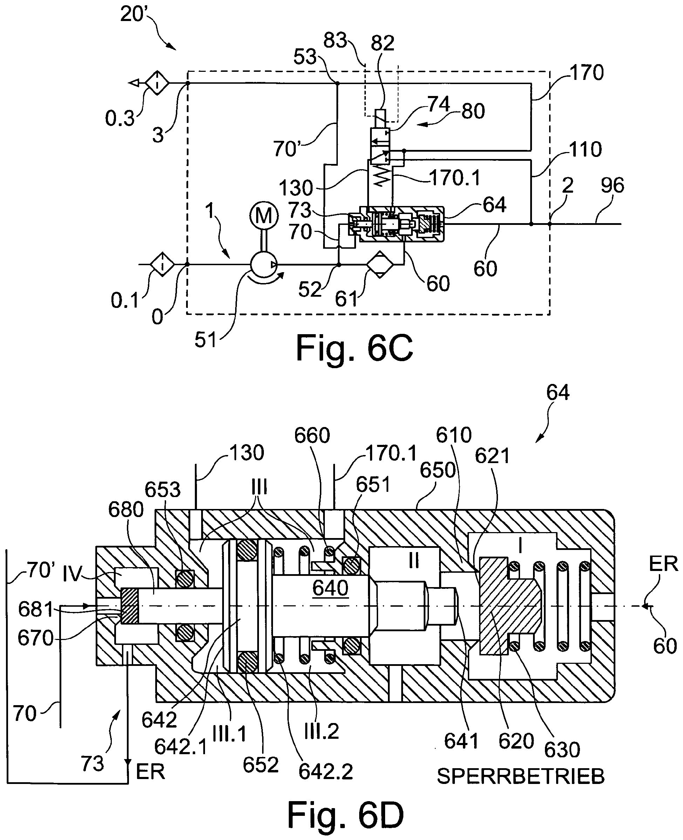

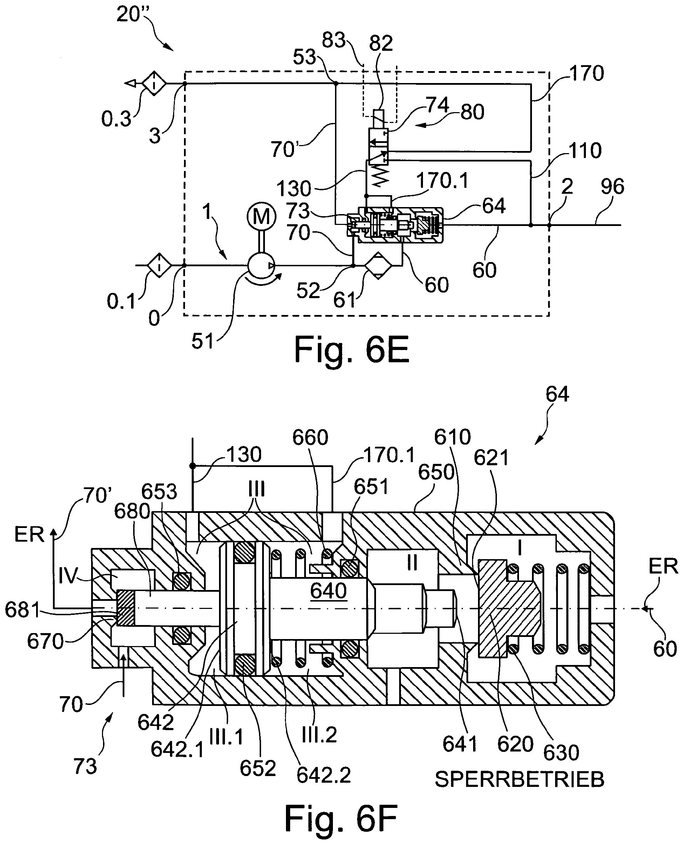

Fig. 6A, Fig. 6B, Fig. 6C, Fig. 6D, Fig. 6E, Fig. 6F ein Schaltbild eines pneumatischen Systems, das im Prinzip dem der Fig. 5A ähnlich und praktisch dem der Fig.5B entspricht, wobei eine besondere konstruktiv realisierte Ausführungsform des pneumatisch entsperrbaren Rückschlagventils in Baueinheit mit einem Entlüftungsventil gebildet ist und wobei das Rückschlagventil in einem Sperrbetrieb gezeigt ist - die Betriebsstellung des Sperrbetriebs eignet sich bei nicht entsperrtem Rückschlagventil zum Umfüllen und/oder Druckmessen in einer Galerie der Pneumatikanlage; die in Fig. 6C, Fig. 6D gegenüber Fig. 6A, Fig. 6B veränderte Druckbeaufschlagung des Steuerkolbens in der Entlüftungskammer beeinflusst das Öffnungsverhalten des Rückschlagventils vorteilhaft; der in Fig. 6E, Fig. 6F kommunizierend verbundene Steuerraum und Entlüftungsraum beeinflusst das Entlüftungsverhalten vorteilhaft - alle Ausführungsformen eignen sich zur beliebigen Kombination im Ganzen oder Teilen miteinander;

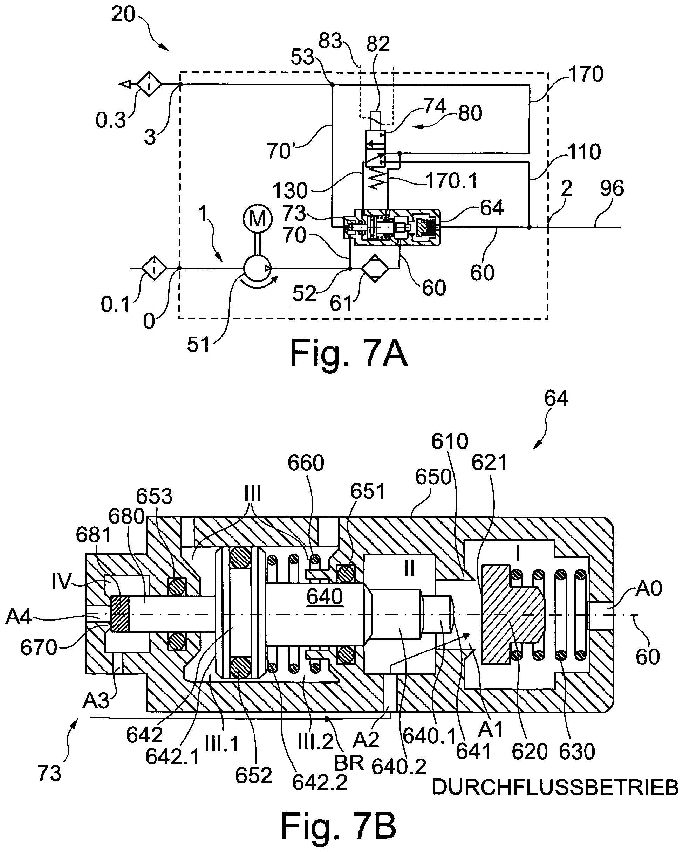

Fig. 7A, Fig. 7B ein pneumatisches System und ein Rückschlagventil, wie in den Fig. 6ff, wobei das Rückschlagventil in Befüllrichtung (Durchlassrichtung) betätigt ist - die Betriebsstellung des Durchlassbetriebs eignet sich zum Befüllen der Pneumatikanlage aus der Druckluftzuführung bei beispielsweise laufendem Verdichter;

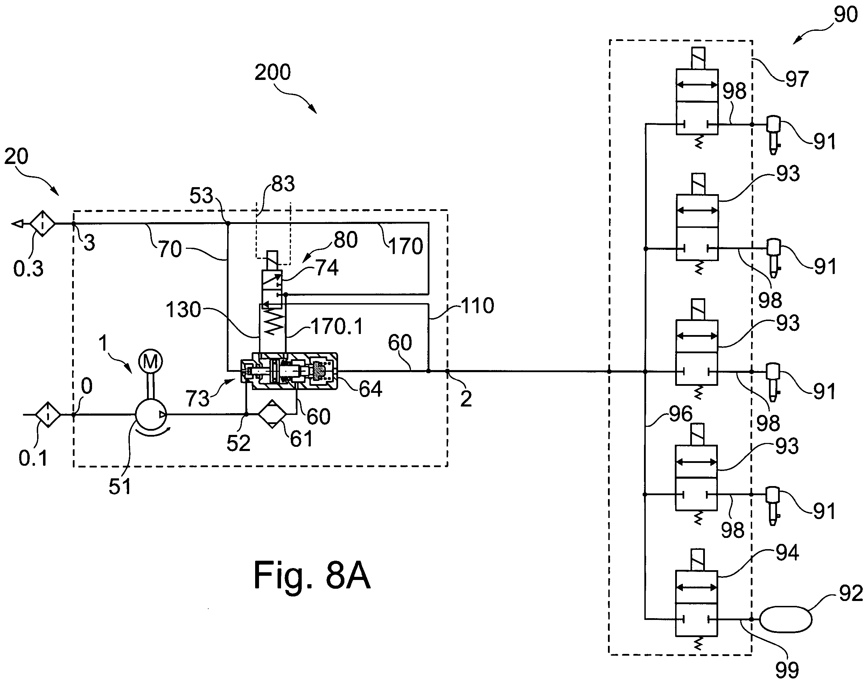

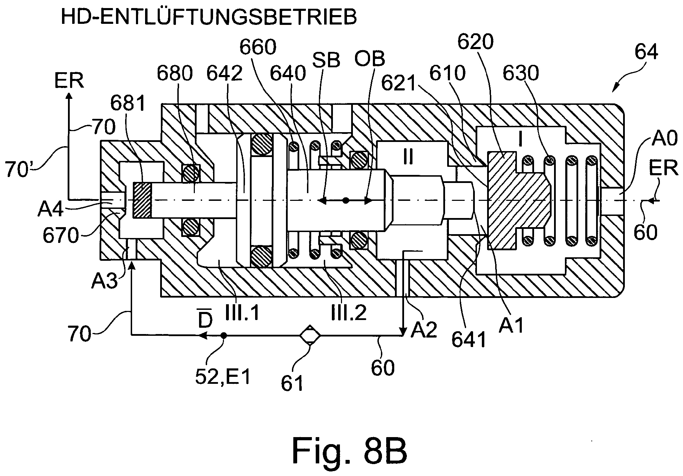

Fig. 8A, Fig. 8B ein pneumatisches System und ein Rückschlagventil, wie in den Fig. 6 und Fig. 7ff, wobei das Rückschlagventil zur Druckluftzuführung in einem Entlüftungsbetrieb und Sperrbetrieb zur Galerie ist (Hochdruckentlüftungsbetrieb), d. h. wobei der Sperrventilkörper durch den Steuerkolben noch nicht aktuiert ist, so dass das Rückschlagventil in Entlüftungsrichtung (Sperrrichtung) sperrt und dennoch das Entlüftungsventil geöffnet ist - diese Betriebsstellung des Steuerkolbens für die Hochdruckentlüftung eignet sich besonders vorteilhaft zum Entlüften der Druckluftversorgungsanlage;
Fig. 9A, Fig. 9B ein pneumatisches System und ein Rückschlagventil, wie in Fig. 6A, Fig. 6B, Fig. 7A, Fig. 7B, Fig. 8A, Fig. 8B, wobei das Rückschlagventil in einem Entsperrbetrieb ist, d. h. wobei der Sperrventilkörper durch den Steuerkolben aktuiert ist, so dass das Rückschlagventil und das Entlüftungsventil in Entlüftungsrichtung (Sperrrichtung) geöffnet ist - diese Betriebsstellung des Entsperrbetriebs eignet sich zum Entlüften der Pneumatikanlage und Regenerieren des Lufttrockners;

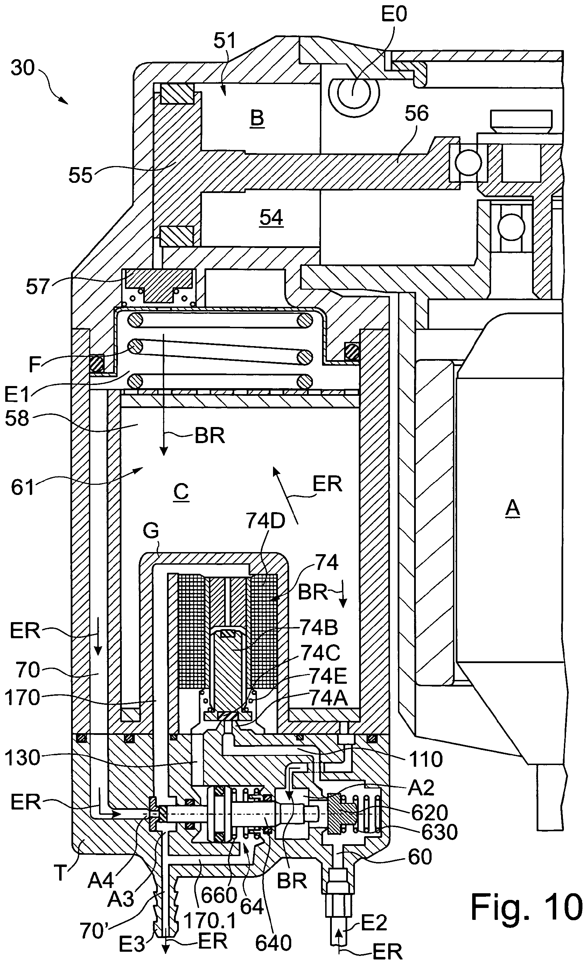

Fig. 10 eine Darstellung einer besonders bevorzugten Konstruktion einer Druckluftversorgungsanlage in Form einer Einrichtung mit einer Gehäuseanordnung mit drei Gehäusebereichen, wobei im dritten Gehäusebereich ein Steuerventil und ein in Baueinheit von Entlüftungsventil und Rückschlagventil realisiertes Trennventil angeordnet ist.

Im Folgenden werden für identische oder ähnliche Teile oder Teile identischer oder ähnlicher Funktion, wo zweckmäßig, gleiche Bezugszeichen verwendet.

Fig. 1 zeigt ein pneumatisches Systems 100 mit einer Druckluftversorgungsanlage 10 und einer Pneumatikanlage 90 in Form einer Luftfederanlage. Die Luftfederanlage weist in diesem Fall eine Anzahl von vier sogenannten Bälgen 91 auf, die jeweils einem Rad eines nicht näher dargestellten Fahrzeugs zugeordnet sind und eine Luftfeder des Fahrzeugs bilden. Des Weiteren weist die Luftfederanlage einen Speicher 92 zur Speicherung schnell verfügbarer Druckluft für die Bälge 91 auf. Den Bälgen 91 ist jeweils in einer Feder-Zweigleitung 98 ein Magnetventil 93 vorgeordnet, welches jeweils als Niveauregelventil zum Öffnen oder Schließen einer mit einem Balg 91 gebildeten Luftfeder dient. Die Magnetventile 93 in den Feder-Zweigleitungen 98 sind als 2/2-Wegeventile ausgebildet. Einem Speicher 92 ist in einer Speicher-Zweigleitung 99 ein Magnetventil 94 in Form eines weiteren 2/2-Wegeventils als Speicherventil vorgeordnet. Die Magnetventile 93, 94 sind mittels der Feder- und Speicher-Zweigleitungen 98, 99 an eine gemeinsame Sammelleitung, eine Galerie 95 bildende Pneumatikleitung, angeschlossen. Die Galerie 95 ist über eine weitere Pneumatikleitung 96 zur Bildung einer pneumatischen Verbindung mit einem Druckluftanschluss 2 der Druckluftversorgungsanlage 10 pneumatisch verbunden. Vorliegend sind die Magnetventile 93, 94 in einem Ventilblock 97 mit fünf Ventilen angeordnet. Die Magnetventile 93, 94 sind in Fig. 1 in einem stromlosen Zustand gezeigt - dabei sind die Magnetventile 93, 94 als stromlos geschlossene Magnetventile gebildet. Andere, hier nicht gezeigte, abgewandelte Ausführungsformen können eine anderen Anordnung der Magnetventile 93, 94 realisieren - es können auch weniger Magnetventile im Rahmen des Ventilblocks genutzt werden.

Insbesondere ist ein im Weiteren als Trennventil beschriebenes Rückschlagventil in einer hier nicht gezeigten Ausführungsform nicht notwendigerweise in der Druckluftversorgungsanlage 10 anzuordnen. Vielmehr kann ein Trennventil auch in der Pneumatikanlage 90 angeordnet sein, beispielsweise auch im Rahmen des Ventilblocks 97. Ebenso kann die Pneumatikanlage 90 einen hier vorliegend nicht näher gezeigten Spannung/Druck-Sensor aufweisen, welcher in einer zusätzlichen, hier nicht dargestellten Zweigleitung an der Galerie 95 angeschlossen sein kann, so dass über den Spannung/Druck-Sensor ein Druck in der Galerie 95 der Pneumatikanlage 90 gemessen werden kann.

Die Druckluftversorgungsanlage 10 dient zum Betreiben der Pneumatikanlage 90. Die Druckluftversorgungsanlage 10 weist dazu eine Druckluftzuführung 1 und einen Druckluftanschluss 2 zur Pneumatikanlage 90 auf. Die Druckluftzuführung 1 ist vorliegend mit einer Luftzuführung 0, einem der Luftzuführung 0 vorgeordneten Luftfilter 0.1 und einem der Luftzuführung 0 nachgeordneten über einen Motor M angetriebenen Luftverdichter 51 und einem Druckluftzuführungsanschluss 52 - gemäß Fig. 9 z. B. in Form einer geeignet ausgebildeten Luftzuführungs-Schnittstelle E0 - gebildet.

Eine erste pneumatische Verbindung ist vorliegend mit einer einzigen Pneumatikhauptleitung 60 zwischen der Druckluftzuführung 1 und dem Druckluftanschluss 2 gebildet, die einerseits am Druckluftzuführungsanschluss 52 und andererseits an den Druckluftanschluss 2 sowie der weiteren Pneumatikleitung 96 zur Bildung der pneumatischen Verbindung anschließt. In der Pneumatikhauptleitung 60 ist ein Lufttrockner 61 und eine erste Drossel 62 mit vorgegebener erster Nennweite angeordnet. Außerdem ist in der Pneumatikhauptleitung 60 ein Trennventil mit einem pneumatisch entsperrbaren Rückschlagventil 63 angeordnet. Das pneumatisch entsperrbare Rückschlagventil 63 ist vorliegend in einer pneumatischen Reihenschaltung mit der Drossel 62 in der Pneumatikhauptleitung 60 angeordnet, wobei die Pneumatikhauptleitung 60 die einzige pneumatische Leitung der ersten pneumatischen Verbindung ist. Die Reihenanordnung aus Drossel 62 und pneumatisch entsperrbarem Rückschlagventil 63 ist also zwischen dem Lufttrockner 61 und dem Druckluftanschluss 2 zur Pneumatikanlage 90 in der Pneumatikhauptleitung 60 angeordnet.

Weiter weist die Druckluftversorgungsanlage 10 eine mit der Pneumatikhauptleitung 60 und einem Entlüftungsanschluss 3 und weiterem Filter 0.3 und/oder einen Schalldämpfer pneumatisch verbundene zweite pneumatische Verbindung, nämlich die Entlüf tungsleitung 70, auf. Vorliegend ist die Entlüftungsleitung 70 am Druckluftzuführungsanschluss 52 an der Pneumatikhauptleitung 60 angeschlossen. In Richtung des Entlüftungsanschlusses 3 ist in der Entlüftungsleitung 70 eine zweite Drossel 72 mit zweiter oberhalb der ersten Nennweite liegenden Nennweite und ein steuerbares Entlüftungsventil 73 angeordnet. Das in der, durch die Entlüftungsleitung 70 gebildeten, zweiten pneumatischen Verbindung angeordnete Entlüftungsventil 73 ist vorliegend als vom pneumatisch entsperrbaren Rückschlagventil 63 separates 3/2-Ventil gebildet.

Das steuerbare Entlüftungsventil 73 ist so als indirekt geschaltetes Relaisventil Teil einer Magnetventilanordnung 80 zur indirekten Schaltung eines Druckluftvolumens der aus der Pneumatikhauptleitung 60 befüllbaren Entlüftungsleitung 70. Dabei weist die Magnetventilanordnung 80 ein Steuerventil 74 in Form eines 3/2-Wege-Magnetventils auf. Das Steuerventil 74 kann mit einem über eine Steuerleitung 83 übermittelbarem Steuersignal in Form eines Spannungs- und/oder Stromsignals an die Spule 82 des Steuerventils 74 angesteuert werden. Bei Ansteuerung kann das Steuerventil 74 von der in Fig. 1 gezeigten stromlos geschlossenen Stellung in eine pneumatisch geöffnete Stellung überführt werden, in der ein über eine pneumatische Steuerleitung 110 aus der Pneumatikhauptleitung 60 abgeleiteter Druck zur pneumatischen Steuerung des steuerbaren Entlüftungsventil 73 als Relaisventil weitergegeben wird. Das steuerbare Entlüftungsventil 73 ist vorliegend zusätzlich mit einer Druckbegrenzung 75 versehen. Die Druckbegrenzung 75 greift über eine pneumatische Steuerleitung vor dem Entlüftungsventil 73 - konkret zwischen zweiter Drossel 72 und Entlüftungsventil 73 - einen Druck ab, welcher bei Übersteigen eines Schwelldrucks den Kolben des Entlüftungsventils 73 gegen die Kraft einer einstellbaren Feder 76 vom Ventilsitz hebt - also das steuerbare Entlüftungsventil 73 auch ohne Ansteuerung über das Steuerventil 74 in die geöffnete Stellung bringt. Auf diese Weise wird vermieden, dass ein ungewollt zu hoher Druck im pneumatischen System 100 entsteht.

Das Steuerventil 74 trennt im vorliegend geschlossenen Zustand die Steuerleitung 110 und ist über eine weitere Entlüftungsleitung 170 mit dem Entlüftungsanschluss 3 pneumatisch verbunden. Mit anderen Worten ist ein zwischen Entlüftungsventil 73 und Steuerventil 74 liegender den Zweiganschluss 77 aufweisender Leitungsabschnitt der Steuerleitung 110 bei der in Fig. 1 gezeigten geschlossenen Stellung des Steuerventils 74 mit der weiteren Entlüftungsleitung 170 zwischen Steuerventil 74 und Entlüftungsanschluss 3 verbunden. Die weitere Entlüftungsleitung 170 schließt dazu im weiteren Zweiganschluss 53 an die Entlüftungsleitung 70 an, so dass die Entlüftungsleitung 70 und die weitere Entlüftungsleitung 170 in einem zwischen dem weiteren Zweiganschluss 53 und dem Entlüftungsanschluss 3 liegenden Abschnitt zusammengeführt werden.

Vorliegend weist die Druckluftversorgungsanlage 10 weiter eine pneumatische Entsperrleitung 130 zwischen dem Steuerventil 74 und dem Rückschlagventil 63 auf, die am Zweiganschluss 77 an die Steuerleitung 110 angeschlossen ist. Über das Steuerventil 74 kann so beim Anstehen eines von der Pneumatikhauptleitung 60 oder von der weiteren Pneumatikleitung 96 über die pneumatische Steuerleitung 110 abgeleiteten Steuerdruckes das Rückschlagventil 63 unter Druckbeaufschlagung der pneumatischen Entsperrleitung 130 - d. h. durch Überführen des Steuerventils 74 in den geöffneten Zustand - entsperrt werden. Mit besonderem Vorteil versehen, führt das Überführen des Steuerventils 74 in den geöffneten Zustand nicht nur zum Entsperren des entsperrbaren Rückschlagventils 63, sondern auch -da auch der zwischen Steuerventil 74 und Entlüftungsventil 73 liegende Leitungsabschnitt der pneumatischen Steuerleitung 110 mit Steuerdruck beaufschlagt wird- zum Überführen des Entlüftungsventils 73 von der geschlossenen Stellung in eine geöffnete Stellung. Mit anderen Worten dient das Steuerventil 74 der Magnetventilanordnung 80 zur Ansteuerung des separat vom Rückschlagventil 63 vorgesehene Entlüftungsventils 73 und des Rückschlagventils 63. Dies führt zu einem beidseitigen pneumatischen Öffnen des Lufttrockners 61 bei Überführung des Steuerventils 74 in die geöffnete Stellung. Diese weitere durch die Druckluftversorgungsanlage 10 einnehmbare Betriebsstellung kann in Betrieb zum Entlüften der Pneumatikanlage 90 und gleichzeitigen Regenerieren des Lufttrockners 61 genutzt werden. Die in Fig. 1 gezeigte Betriebsstellung der Druckluftversorgungsanlage 10 dient unter Durchfluss des Rückschlagventils 63 - vorliegend gezeigt in Durchlassstellung vor allem zum Befüllen der Pneumatikanlage 90 über die Pneumatikhauptleitung 60. Dazu werden die den Bälgen 91 vorgeordneten Magnetventile 93 und/oder das dem Speicher 92 vorgeordnete Magnetventil 94 in eine geöffnete Stellung gebracht. Gleichwohl ist bei geschlossener Stellung der Magnetventile 93, 94 in der Pneumatikanlage 90 - aufgrund des vorliegend nicht entsperrten Rückschlagventils 63 - eine Betriebsstellung der Pneumatikanlage 90 entkoppelt von der Druckluftversorgungsanlage 10 möglich. Mit anderen Worten kann ein Querschalten von Bälgen 91 (z. B. im Off-Road-Betrieb eines Fahrzeugs), ein Füllen der Bälge 91 aus dem Speicher 92 oder eine Druckmessung in der Pneumatikanlage 90 über die Galerie 95 vorgenommen werden, ohne dass die Druckluftversorgungsanlage 10 druckbeaufschlagt wird. Insbesondere wird der Lufttrockner 61 aufgrund des vom Druckluftanschluss 2 zur Druckluftzuführung 1 gesperrten Rückschlagventils 63 und des geschlossenen Steuerventils 74 vor unnötiger Beaufschlagung mit Druckluft geschützt. Dem Konzept der Erfindung folgend wurde bei der vorliegend gezeigten Ausführungsform erkannt, dass eine Beaufschlagung des Lufttrockners 61 mit Druckluft nicht bei jeder Betriebsstellung der Pneumatikanlage 90 vorteilhaft ist. Vielmehr ist es für eine effektive und schnelle Regeneration des Lufttrockners 61 vorteilhaft, wenn diese ausschließlich im Falle einer Entlüftung der Pneumatikanlage 90 mit entsperrtem Rückschlagventil 63 erfolgt- d. h. in einer Entlüftungsrichtung von Druckluftanschluss 2 zum Druckluftzuführungsanschluss 52. Dazu wird - wie oben erläutert - das Steuerventil 74 in eine geöffnete Schaltstellung gebracht, so dass sowohl das Entlüftungsventil 73 öffnet als auch das Rückschlagventil 63 entsperrt wird. Eine Entlüftung der Pneumatikanlage 90 kann über das entsperrte Rückschlagventil 63, die Drossel 62 unter Regeneration des Lufttrockners 61 sowie über die zweite Drossel 72 und das geöffnete Entlüftungsventil 73 zum Entlüftungsanschluss 3 erfolgen.

Fig. 2 zeigt eine in Bezug auf Fig. 1 leicht abgewandelte Druckluftversorgungsanlage 11, in welcher für identische oder ähnliche Teile oder Teile identischer oder ähnlicher Funktion, wo zweckmäßig, gleiche Bezugszeichen verwendet sind. Zunächst ist unter Ergänzung zur Druckluftversorgungsanlage 10 bei der Druckluftversorgungsanlage 11 das pneumatisch entsperrbare Rückschlagventil 63 in einer ersten bevorzugten, konstruktiv realisierten Ausführungsform gezeigt, welche in einer für Fig. 2 und Fig. 3 gleichermaßen geltenden Detaildarstellung der Fig. 4 vergrößert dargestellt ist. Zur Beschreibung der konstruktiv realisierten Ausführungsform des pneumatisch entsperrbaren Rückschlagventils 63 wird dazu im Weiteren unter anderem auf die Fig. 4 bereits Bezug genommen. Das pneumatisch entsperrbare Rückschlagventil 63 ist in der abgewandelten Ausführungsform der Druckluftversorgungsanlage 11- wie bereits in Fig. 1 gezeigt - über eine pneumatische Entsperrleitung 130 vom Steuerventil 74 ansteuerbar. Dabei ist die pneumatische Entsperrleitung 130 über eine erste EntsperrZweigleitung 130.1 (bei Fig. 6 ff die pneumatische Entsperrleitung 130) und eine zweite Entsperr-Zweigleitung 130.2 (bei Fig. 6 ff die pneumatische Entlüftungszweigleitung 170.1) an das Rückschlagventil 63 angeschlossen ist. Die Entsperr-Zweigleitungen 130.1 und 130.2 sind, wie im Weiteren erläutert, an eine Steuerkammer des Rückschlagventils 63 angeschlossen. Im Folgenden ist deren Wirkung beispielhaft erläutert. Dazu ist vorliegend die erste Entsperr-Zweigleitung 130.1 an einen Steuerraum III.1 der Steuerkammer und die zweite Entsperr-Zweigleitung 130.2 an einen Entlüftungsraum III.2 der Steuerkammer des Rückschlagventils 63 angeschlossen.

Der Steuerkolben 640 weist einen die Trenndichtung 652 tragenden Ringwulst 642 auf, der eine dem Entlüftungsraum III.2 zugewandte zweite Seite 642.2 und eine dem Steuerraum III.1 zugewandte erste Seite 642.1 hat. Dabei ist eine druckbeaufschlagbare entlüftungsraumseitige Fläche der zweiten Seite 642.2 geringer als eine druckbeaufschlagbare steuerraumseitige Fläche der ersten Seite 642.1. Mit anderen Worten: Der Steuerraum weist eine größere druckbeaufschlagbare Fläche eines Ringwulstes 642 an einem Steuerkolben auf als der Entlüftungsraum und steht zudem über die Entsperr-Zweigleitung 130.1 und die Entsperr-Zweigleitung 130.2 in pneumatisch kommunizierender Verbindung mit dem Entlüftungsraum. Bei Bewegung des Steuerkolbens 640 mit Ringwulst 642 entsteht so eine Verstärkung der pneumatischen Aktuierung durch Umlagerung von Druckluft vom Entlüftungsraum III.2 zum Steuerraum III.1. Dies führ vorteilhaft zu einem beschleunigten Entsperrvorgang für das Rückschlagventil 63. Die Beschleunigungsgröße hängt von den Flächenverhältnissen der druckbeaufschlagbaren Flächen am Ringwulst 642 und ggf. der Leitungsquerschnitte auf der Steuerraumseite relativ zur Entlüftungsraumseite ab. Eine weitere dieses vorteilhafte Prinzip nutzende Ausführungsform ist noch anhand von Fig. 6E, Fig. 6F erläutert.

In einer weiter abgewandelten Ausführungsform der Fig. 3 ist die Druckluftversorgungsanlage 12 bei ansonsten gleicher Ausführung wie in Fig. 1 und Fig. 2 mit einem Rückschlagventil 63 versehen, das wiederum über eine Entsperrleitung 130 (diesmal eine einzige Entsperrleitung 130) mit dem Steuerventil 74 pneumatisch verbunden ist. Die einzige Entsperrleitung 130 ist dazu an die Steuerkammer des Rückschlagventils 63 - nämlich konkret den Steuerraum der Steuerkammer - pneumatisch angeschlossen. Ein Entlüftungsraum der Steuerkammer des Rückschlagventils 63 ist dagegen bei der abgewandelten Ausführungsform der Druckluftversorgungsanlage 12 der Fig. 3 über eine Entlüftungs-Zweigleitung 170.1 an die weitere Entlüftungsleitung 170 und über den weiteren Zweiganschluss 53 an die Entlüftungsleitung 70 und weiter an den Entlüftungsanschluss 3 pneumatisch angeschlossen. Alternativ kann diese Entlüftungs-Zweigleitung 170.1 direkt mit der Umgebung verbunden werden (nicht dargestellt). Durch diese Maßnahme ergeben sich andere Beschleunigungsgrößen im Vergleich zur Schaltung gemäß Fig. 2. Somit zeigt Fig. 3 eine abgewandelte Druckluftversorgungsanlage 12, bei der das pneumatisch entsperrbare Rückschlagventil 63 mit einer separaten Entlüftungsleitung - nämlich über die Entlüftungs-Zweigleitung 170.1 und die weitere Entlüftungsleitung 170 und Entlüftungsleitung 70 am Entlüftungsanschluss 3 angeschlossen ist.

Wie sich unter Erläuterung der weiteren Fig. 4 zeigt, ist die abgewandelte Ausführungsform einer Druckluftversorgungsanlage 11 - unter Nutzung der Entsperr-Zweigleitung 130.1, 130.2 - für ein schnelles Aktuieren eines Steuerkolbens des Rückschlagventils 63 ausgelegt, da sowohl die Entsperr-Zweigleitung 130.1 als auch die Entsperr-Zweigleitung 130.2 zur Aktuierung eines Steuerkolbens des Rückschlagventils 63 genutzt werden kann. Dagegen ist die abgewandelte Ausführungsform der Druckluftversorgungsanlage 12 der Fig. 3 besonders einfach realisiert, da der Entlüftungsraum einer Steuerkammer des Rückschlagventils 63 praktisch immer unter Atmosphärendruck - d. h. offen zum Entlüftungsanschluss 3 - gehalten wird.

Fig. 4 zeigt in vergrößerter Darstellung und im Detail das pneumatisch entsperrbare Rückschlagventil 63 der Fig. 1, Fig. 2 und Fig. 3.

Das Rückschlagventil 63 weist einerseits eine mit der Pneumatikhauptleitung 60 pneumatisch verbundene Sperrkammer I und eine mit der Pneumatikhauptleitung 60 ebenfalls verbindbare Durchflusskammer II auf. Zwischen Sperrkammer I und Durchflusskammer II ist ein Sperrventilsitz 610 vorgesehen. Ein den Sperrventilsitz 610 im vorliegend gezeigten Sperrbetrieb abschließender Sperrventilkörper 620 ist durch eine als Druckfeder ausgebildete Ventilfeder 630 auf dem Sperrventilsitz 610 gehalten. Das Rückschlagventil 63 ist also grundsätzlich in einer vom Druckluftanschluss 2 zum Lufttrockner 61 weisenden Entlüftungsrichtung ER im Sperrbetrieb gehalten, da ein Druck der Pneumatikanlage 90 auf den Sperrventilkörper 620 drückt und diesen zusätzlich zur Ventilfeder 630 auf dem Sperrventilsitz 610 hält.

In einer Befüllrichtung BR vom Lufttrockner 61 zum Druckluftanschluss 2 muss eine in der Pneumatikhauptleitung 60 geführte Druckluftströmung D lediglich den Gegendruck der Ventilfeder 630 überwinden, um den Sperrventilkörper 620 vom Sperrventilsitz 610 zu heben. Dadurch wird die Durchflusskammer II mit der Sperrkammer I in Befüllrichtung BR pneumatisch verbunden, so dass die Pneumatikhauptleitung 60 in Befüllrichtung BR von der Druckluftströmung D vollständig in Richtung der Pneumatikanlage 90 durchströmbar ist.

Die in Fig. 4 für einen Sperrbetrieb gezeigte Stellung des Rückschlagventils 63 kann in einer Entlüftungsrichtung ER einer Druckluftströmung durch pneumatisches Entsperren des Rückschlagventils 63 aufgehoben werden. Eine pneumatische Entsperrung kann durch Aktuieren des Steuerkolbens 640 erfolgen, welcher dazu - in Fig. 4 nach rechts gegen eine Federkraft der Feder 660 verschoben - auf den Sperrventilkörper 620 wirkt. Dazu drückt die Anschlagfläche 641 des Steuerkolbens 640 auf die Sitzfläche 621 des Sperrventilkörpers 620. Der Sperrventilkörper 620 kann so vom Sperrventilsitz 610 abgehoben werden, so dass selbiger im Entsperrbetrieb durch den Sperrventilkörper 620 freigegeben ist. In solch einem Fall kann eine Druckluftströmung I in Entlüf tungsrichtung ER die Sperrkammer I und die Durchflusskammer II durchströmen und vom Druckluftanschluss 2 zum Lufttrockner 61 unter Regeneration desselben gelangen.

Zum Aktuieren des Steuerkolbens 640 weist das Rückschlagventil 63 eine mit der pneumatischen Entsperrleitung 130 pneumatisch verbundene Steuerkammer III auf, die von der Durchflusskammer II pneumatisch getrennt ist. Eine pneumatische Trennung erfolgt durch eine Dichtung 651 des Gehäuses 650 des Rückschlagventils 63 zum Steuerkolben 640. Weiter ist die Steuerkammer III des Rückschlagventils 63 vorliegend in einen Steuerraum III.1 und einen Entlüftungsraum III.2 geteilt. Die Teilung erfolgt mit einer weiteren zwischen dem Gehäuse 650 und am Steuerkolben 640 liegenden Trenndichtung 652. Im Unterschied zu der feststehend im Gehäuse 650 angebrachten Dichtung 651 ist die Trenndichtung 652 in einer Ausnehmung des Steuerkolbens 640 angebracht und mit dem Steuerkolben 640 am Gehäuse 650 im Bereich der Steuerkammer III verschieblich. Mit anderen Worten ist die Trenndichtung 652 dazu geeignet, bei jeder Stellung des Steuerkolbens 640 die Steuerkammer III pneumatisch in einen Steuerraum III.1 und einen Entlüftungsraum III.2 variabel und dicht aufzuteilen.

In Bezug auf Fig. 2 ist der Steuerraum III.1 an die erste Entsperr-Zweigleitung 130.1 pneumatisch angeschlossen und der Entlüftungsraum III.2 an die zweite Entsperr-Zweigleitung 130.2 pneumatisch angeschlossen. In Bezug auf Fig. 3 ist der Steuerraum III.1 an die einzige Entsperrleitung 130 pneumatisch angeschlossen. Der Entlüf tungsraum III.2 ist an die Entlüftungs-Zweigleitung 170.1 pneumatisch angeschlossen.

Der Steuerkolben 640 kann durch Beaufschlagen der Steuerkammer III.1 mit einem Steuerdruck aus der Entsperr-Zweigleitung 130.1 oder der einzigen Entsperrleitung 130 mit einem Entsperrdruck beaufschlagt werden. Der Entsperrsteuerdruck ist geeignet, den Steuerkolben 640 mit seiner Sitzfläche 643 vom Steuersitz 644 abzuheben und gegen den Federdruck der Steuerfeder 660 in Richtung des Sperrventilkörpers 620 zu bewegen. In Bezug auf Fig. 2 wird diese Bewegung durch weitere Druckbeaufschlagung der ersten Entsperr-Zweigleitung 130.1 durch aus dem Entlüftungsraum III.2 und der zweiten Entsperr-Zweigleitung 130.2 geführte Druckluft beschleunigt werden. In Bezug auf Fig. 3 erfolgt die Bewegung des Steuerkolbens 640 gegen den über die weitere Entlüftungs-Zweigleitung 170.1 anstehenden Atmosphärendruck in den Entlüftungsraum III.2.

Fig. 5A zeigt eine an die Darstellung der Fig. 1 angelehnte Darstellung eines Schaltbildes eines pneumatischen Systems 200 mit einer Ausführungsform einer Druckluftversorgungsanlage 20 gemäß einer zweiten Variante der Erfindung. Für in Bezug auf Fig. 1 identische oder ähnliche Teile oder Teile identischer oder ähnlicher Funktion sind der Einfachheit halber, wo zweckmäßig, gleiche Bezugszeichen verwendet.

Vorliegend ist das Entlüftungsventil 73, das Rückschlagventil 63 und die Drossel 62 als Baueinheit realisiert - nämlich als Rückschlagventil 64, wie es in den weiteren Fig. 6B, Fig. 6D, Fig. 6F, Fig. 7B, Fig. 8B in unterschiedlichen Funktionsstellungen, zusammen mit Schaltbildern Fig. 6A, Fig. 6C, Fig. 6E Fig. 7A, Fig. 8A einer Druckluftversorgungsanlage 20 gezeigt ist. Konkret ist vorliegend das Rückschlagventil 63 zusammen mit der Drossel 62 in Baueinheit in Form eines Drosselrückschlagventils 63' gebildet. Das Drosselrückschlagventil 63' ist in Baueinheit mit dem als Relaisventil ausgebildeten Entlüftungsventil 73 gebildet. Mittels dem gleichen Steuerventil 74 ist unter Steuerdruckbeaufschlagung das Rückschlagventil 63 pneumatisch entsperrbar während gleichzeitig das Entlüftungsventil 73 pneumatisch vorgesteuert zu Öffnen ist. Ein zwischen Entlüftungsventil 73 und Steuerventil 74 liegender den Zweiganschluss 77 aufweisender Leitungsabschnitt der Steuerleitung 110 ist bei geöffneter Stellung des Steuerventils 74 mit dem Entlüftungsventil 73 steuerdruckbeaufschlagbar verbunden. Vorliegend ist auch eine pneumatische Entsperrleitung 130 steuerdruckbeaufschlagbar zwischen dem Steuerventil 74 und dem Rückschlagventil 63 über den Zweiganschluss 77 an die Steuerleitung 110 angeschlossen. Am Rückschlagventil 63 und am Entlüftungsventil 73 liegt ein Steuerdruck der Steuerleitung 110 an und dient zum Entsperren des Rückschlagventils 63 und gleichzeitigen Öffnen des Entlüftungsventils 73.

Fig. 5B zeigt ein praktisch dem gleichen Prinzip des pneumatischen Systems 200 der Fig. 5A folgendes pneumatisches System 200, das deswegen wie auch die weiteren Teile mit gleichen Bezugszeichen versehen ist. Leicht abgewandelt -gleichwohl dem Prinzip des Rückschlagventils 64 der Fig. 5A folgend- zeigt auch Fig. 5B ein Rückschlagventil 64, das konkret mit dem Bauelement eines Rückschlagventils 63 in Baueinheit mit der Drossel 62 und dem als Relaisventil ausgebildeten Entlüftungsventil 73 gebildet ist. Die Leitungsführung einer Pneumatikleitung 60 unterscheidet sich im Bereich des Rückschlagventils 63 von der Leitungsführung der Pneumatikleitung 60 in Fig. 5A. Vorliegend wird in Befüllrichtung der Pneumatikanlage 90 zunächst das Rückschlagventil 63 unter selbsttätigen Öffnens desselben und anschließend die Drossel 62 durchströmt; insofern ist die Reihenanordnung des Rückschlagventils 63 und der Drossel 62 in der Pneumatikhauptleitung 60 in Fig. 5B eine andere als die der Fig. 5A; in Fig. 5B sind Rückschlagventil 63 und Drossel 62 in Befüllrichtung in umgekehrter Reihenfolge der gleichen Teile der Fig. 5A angeordnet.

Darüber hinaus ist in Fig. 5B, zur gleichzeitigen entsperrenden Betätigung des Rückschlagventils 63 und zum öffnenden Betätigen des Entlüftungsventils 73, ein vom Steuerventil 74 pneumatisch ansteuerbarer Doppelrelaiskolben 640' vorgesehen, der in den folgenden Fig. 6A bis Fig. 9B als Steuerkolben 640 konstruktiv realisiert ist. Der in Fig. 5B als Doppelrelaiskolben 640' dargestellte Steuerkolben hat einen Relais-Entlüftungsventilkörper 680', der in den folgenden Figuren als Entlüftungsventilkörper 680 konstruktiv realisiert ist. Der Doppelrelaiskolben 640' hat auch einen Relais-Entsperrkörper 641', der in den folgenden Figuren als erster und zweiter Abschnitt 640.1, 640.2 mit Anschlagfläche 641 konstruktiv realisiert ist. Insoweit stellt Fig. 5B symbolisch die schaltungstechnische Realisierung der nachfolgend beschriebenen konstruktiv realisierten Ausführungsformen dar. Der Doppelrelaiskolben 640' verdeutlicht vorliegend das Prinzip zum Entsperren des Rückschlagventils 63 und gleichzeitigen Betätigen des Entlüftungsventil 73 über zwei Betätigungselemente -nämlich über Relais-Entsperrkörper 641' und Relais-Entlüftungsventilkörper 680', die als einstückiger Körper oder in einer ersten Abwandlung als separate Körper ausgebildet werden können. Die Betätigungselemente des Doppelrelaiskolbens 640' können bevorzugt - wie in Fig. 5B symbolisch gezeigt und in den folgenden Figuren konstruktiv realisiert - als einstückige Bereiche des Doppelrelaiskolbens 640', nämlich als Relais-Entlüftungsventilkörper 680' und Relais-Entsperrkörper 641', gebildet sein. Insofern etabliert sich die gekoppelte Ausführung der Betätigungselemente für Rückschlagventil 63 und Entlüftungsventil 73 in der einstückigen Ausführung des Steuerkolbens 640.

Fig. 6A zeigt erkennbar die Druckluftversorgungsanlage 20 mit Steuerventil 74 in seiner anhand von Fig. 2 bereits grundsätzlich erläuterten Funktion und Anordnung zusammen mit der als Baueinheit von Entlüftungsventil 73 und des in Fig. 5A angegebenen Drosselrückschlagventil 63' realisierter zweiten Ausführungsform eines Rückschlagventils 64. Erkennbar erübrigt sich, aufgrund der zweiten Ausführungsform des Rückschlagventils 64, eine in Fig. 1 bis Fig. 3 dargestellte separate Anordnung des Entlüftungsventils 73 in der Entlüftungsleitung 70. Vielmehr ist das Steuerventil 74 - ähnlich wie anhand von Fig. 3 erläutert- über die pneumatische Entsperrleitung 130 und Steuerraum III.1 sowie die weitere Entlüftungs-Zweigleitung 170.1 und Entlüftungsraum III.2 pneumatisch an das Rückschlagventil 64 angebunden. Zur Beschreibung des Rückschlagventils 64 wird hinsichtlich der Funktion der Sperrkammer I, der Durchflusskammer II und der Steuerkammer III auf die Beschreibung der Fig. 4 verwiesen. Dazu sind vorliegend für identische oder ähnliche Teile oder Teile identischer oder ähnlicher Funktion wiederum gleiche Bezugszeichen verwendet. Im Folgenden werden die Unterschiede zwischen dem Rückschlagventil 64 und dem Rückschlagventil 63 erläutert.

Das in Fig. 6A gezeigte pneumatisch entsperrbare Rückschlagventil 64 in Baueinheit mit einem steuerbaren Entlüftungsventil ist in Fig. 6B vergrößert dargestellt. Die Fig. 6B zeigt das Rückschlagventil 64 im Sperrbetrieb, d. h. in einer Funktionsstellung, die auch das Rückschlagventil 63 der Fig. 4 einnimmt und die z. B. für ein Umfüllen oder Druckmessen in der Galerie 96 der Pneumatikanlage 90 genutzt werden kann. Im Unterschied und zusätzlich zum Rückschlagventil 63 der Fig. 4 weist das Rückschlagventil 64 der Fig. 6A eine Entlüftungskammer IV auf, die mit der zweiten pneumatischen Verbindung - vorliegend in Form der Entlüftungsleitungen 70, 70' - pneumatisch verbunden ist. Das Rückschlagventil 64 der Fig. 6A weist dazu einen Entlüftungsventilsitz 670 zwischen Entlüftungskammer IV und Entlüftungsleitungen 70, 70' auf. Vorliegend ist in Entlüftungsrichtung ER über dem Entlüftungskörper 680 der Entlüftungskammer IV der trocknerseitige Teil der Entlüftungsleitung 70 und unter dem Entlüftungskörper 680 der Entlüftungskammer IV der entlüftungsseitige Teil der Entlüftungsleitung 70' angeschlossen. Der Entlüftungsventilsitz 670 ist vorliegend im Sperrbetrieb durch einen mit dem Steuerkolben 640 einstückig gebildeten Entlüftungsventilkörper 680 pneumatisch dicht abgeschlossen. Der Entlüftungsventilkörper 680 weist eine Entlüftungsventildichtung 681 auf, die mit ihrer nicht näher bezeichneten Sitzfläche auf dem Entlüftungsventilsitz 670 anschlägt und die pneumatische Verbindung zur Entlüftungsleitung 70 verschließt. Im Übrigen ist der-hier integral mit dem Steuerkolben 640 gebildete- Entlüftungsventilkörper 680 durch eine weitere in dem Gehäuse 650 des Rückschlagventils gebildete Dichtung 653 abgedichtet. Die Entlüftungskammer IV und die Steuerkammer III - nämlich insbesondere der Steuerraum III.1 der Steuerkammer III und die Entlüftungskammer IV - sind somit getrennt bzw. gegeneinander abgedichtet. Gleichwohl sind der Steuerraum III.1 der Steuerkammer III und die Entlüftungskammer IV insofern quasi pneumatisch gekoppelt als, dass eine Bewegung des Steuerkolbens 640 auch eine Bewegung des Entlüftungsventilkörpers 680 impliziert. Analog gilt dies für die quasi pneumatische Kopplung von Durchflusskammer II und Entlüftungsraum III.2 der Steuerkammer III, da eine Bewegung des Steuerkolbens 640 auch eine Bewegung der in Fig. 7B bezeichneten Abschnitte des Steuerkolbens 640 im Austritt A1 der Durchflusskammer II zur Sperrkammer I impliziert.

Wie bereits anhand von Fig. 4 erläutert, kann im Sperrbetrieb eine Druckluftströmung in Entlüftungsrichtung ER das Rückschlagventil 64 nicht passieren, da der Sperrventilkörper 620, aufgrund des Federdrucks der Ventilfeder 630 als auch des Drucks in der Pneumatikhauptleitung 60 oder der weiteren Pneumatikleitung 96 auf dem Sperrventilsitz 610 gehalten wird.

Die vorliegend gezeigte Funktionsstellung des Rückschlagventils 64 im Sperrbetrieb eignet sich zur pneumatischen Entkopplung der Druckluftversorgungsanlage 20 von der Pneumatikanlage 90. In der Pneumatikanlage 90 kann ein Umfüllen oder Druckmessen oder Querschalten von Bälgen 91 und/oder Speicher 92 erfolgen, ohne dass ein Lufttrockner 61 der Druckluftversorgungsanlage 20 mit Druckluftbewegung beaufschlagt wird.

Fig. 6C bis Fig. 6F zeigen leicht abgewandelte Ausführungsformen zu der in Fig. 6A bis Fig. 6B grundsätzlich erläuterten Ausführungsform des entsperrbaren Rückschlagventils 64 in einer Druckluftversorgungsanlage 20. Die konstruktiv praktisch identische Ausführungsform des Rückschlagventils 64 ist deshalb in Fig. 6D und Fig. 6F mit gleichen Bezugszeichen versehen. Unterschiedlich gestaltet ist jedoch die Anbindung des Rückschlagventils 64 im Vergleich zu der in Fig. 6A gezeigten Druckluftversorgungsanlage 20. Dazu ist in Fig. 6C eine Druckluftversorgungsanlage 20' dargestellt, bei welcher die Anbindung der Entlüftungskammer IV des Rückschlagventils 64 an die Entlüftungsleitungen 70, 70' im Unterschied zur Druckluftversorgungsanlage 20 umgedreht ist. D. h. vorliegend ist in Entlüftungsrichtung ER unter dem Entlüftungskörper 680 der Entlüftungskammer der trocknerseitige Teil der Entlüftungsleitung 70 und über dem Entlüftungskörper 680 der Entlüftungskammer IV der entlüftungsseitige Teil der Entlüftungsleitung 70' angeschlossen. Dies führt zu einer im Vergleich zur Druckversorgungsanlage 20 veränderten Druckbeaufschlagung des Steuerkolbens 640, da nunmehr der mit dem Steuerkolben 640 verbundene Entlüftungskörper 680 durch einen Entlüftungsdruck in Entlüftungsrichtung ER unterseitig beaufschlagt wird und so zusätzlich zu einem Steuerdruck in der Steuerkammer III gegen die Federkraft der Steuerfeder 660 wirkt. Im Ergebnis führt dies dazu, dass der Steuerkolben 640 bei einem vorbestimmbaren Maximaldruck gegen die Federkraft der Steuerfeder 660 bereits durch einen Entlüftungsdruck in Entlüftungsrichtung ER zu öffnen ist. Somit wird durch die in Fig. 6C dargestellte Druckluftversorgungsanlage 20' mit dem vorliegend beschriebenen, in Fig. 6D im Detail dargestellten Anschluss des Rückschlagventils 64 nicht nur das Öffnungsverhalten desselben beeinflusst, sondern darüber hinaus in besonders vorteilhafter Weise eine Druckbegrenzungsfunktion für das Rückschlagventil 64 implementiert.

Fig. 6E zeigt eine Druckluftversorgungsanlage 20", bei welcher das Rückschlagventil 64 analog einem Anschlusskonzept der Fig. 2 angeschlossen ist. Dazu ist das Rückschlagventil 64 in Fig. 6F im Detail mit dem Anschluss der pneumatischen Entsperrleitung 130 und der Entlüftungszweigleitung 170.1 im Unterschied zur Fig. 6B und Fig. 6A gezeigt. Für die ansonsten im wesentlichen identisch realisierte Ausführungsform sind im übrigen gleiche Bezugszeichen betreffend identische oder ähnliche Merkmale wie bei Fig. 6A und Fig. 6B genutzt. Vorliegend ist die pneumatische Entsperrleitung 130 an den Steuerraum III.1 des Rückschlagventils 64 angeschlossen. Die zuvor in Fig. 6A und Fig. 6B so bezeichnete Entlüftungszweigleitung 170.1 ist wiederum an den Entlüf tungsraum III.2 der Steuerkammer III angeschlossen - nunmehr aber auf die pneumatische Entsperrleitung rückgeführt. Dadurch ist in Abwandlung zur Ausführungsform der Fig. 6A, Fig. 6B der Steuerraum III.1 und der Entlüftungsraum III.2 des Rückschlagventils in der Druckluftversorgungsanlage 20" der Fig. 6E und Fig. 6F pneumatisch kommunizierend verbunden. Dies führt vorteilhaft wiederum zu einem beschleunigten Entsperrvorgang für das Rückschlagventil 64. Die Beschleunigungsgröße hängt von den Flächenverhältnissen der druckbeaufschlagbaren Flächen am Ringwulst 642 und gegebenenfalls der Leitungsquerschnitte auf der Steuerraumseite relativ zur Entlüftungsraumseite ab, da diese die Bewegung des Steuerkolbens 640 mit Ringwulst 642 unter Verstärkung der pneumatischen Aktuierung durch Umlagerung von Druckluft vom Entlüftungsraum III.2 zum Steuerraum III.1 beeinflussen. Vorteilhaft bei dieser Ausführungsform ist zum einen, dass die Entlüftungszweigleitung 170.1 vergleichsweise kurz gehalten werden kann bzw. einfach mit der pneumatischen Entsperrleitung 130 kurzgeschlossen werden kann. Unter Beaufschlagung des Ringwulstes 642 von beiden Seiten in bewegungsbeschleunigender Weise durch Rückkopplung bzw. Umlagerung von Druckluft kann zudem ein weiterer Verlauf der Entlüftungszweigleitung 170.1 weitgehend eingespart werden.

Fig. 7A zeigt in Verbindung mit Fig. 7B wiederum die Druckluftversorgungsanlage 20 mit dem Rückschlagventil 64 - diesmal im Durchflussbetrieb. Das Steuerventil 74 befindet sich, wie bei Fig. 6A, in einer geschlossenen Stellung, so dass der Steuerkolben 640 des Rückschlagventils 64 nicht aktuiert ist. Beim Befüllen der Pneumatikanlage 90 in Befüllrichtung BR im Durchlassbetrieb des Rückschlagventils 64 wird der Luftverdichter 51 über den Motor M betätigt, so dass die Druckluftzuführung 1 über den Druckluftzuführungsanschluss 52 und den Lufttrockner 61 eine Druckluftströmung D über die Pneumatikhauptleitung 60 in Durchlassrichtung des Rückschlagventils 64 und über den Druckluftanschluss 2 zur Pneumatikanlage 90 fördern kann. Die Druckluftströmung D baut dabei in der Durchflusskammer II einen Druck gegen den Sperrventilkörper 620 bzw. gegen dessen Sitzfläche 621 auf, der groß genug ist, die Druckkraft der Ventilfeder 630 zu überwinden, so dass der Sperrventilkörper 620 vom Sperrventilsitz 610 abgehoben wird. Dadurch wird der Weg für die Druckluftströmung D von der Durchflusskammer 11 zur Sperrkammer I, usw. in die Pneumatikhauptleitung 60 zum Druckluftanschluss 2 freigegeben. Der Steuerkolben 640 ist wiederum nicht aktuiert und behält seine bereits in Fig. 6B dargestellte Stellung. Im Übrigen entspricht die Funktionsweise des Rückschlagventils 64 der Fig. 6B bzw. Fig. 7B (Sperrbetrieb bzw. Durchflussbetrieb) im Wesentlichen dem anhand von Fig. 4 erläuterten Sperrbetrieb und Durchflussbetrieb des Rückschlagventils 63.

Fig. 8A und Fig. 8B zeigen nunmehr im Unterschied zu Fig. 1 bis Fig. 4 die Druckluftversorgungsanlage 20 und das dazugehörige Rückschlagventil 64 in einem Hochdruckentlüftungsbetrieb. Nach Analyse der Druckverläufe stellt dieser zunächst eine Zwischenstellung zu einem vollständig geöffneten und entsperrten Rückschlagventil dar; d. h. die Zwischenstellung wird hier zunächst erreicht und erläutert für eine Öffnungsbewegung OB des Steuerkolbens 640. Deren gezielte Nutzung kann jedoch den gesamten Einsatzbereich der Druckluftversorgungsanlage 20 mit dem Rückschlagventil 64, insbesondere in der in Fig. 8B gezeigten Stellung definieren. Dazu ist unter Bezug auf Fig. 8A bei der Druckluftversorgungsanlage 20 das Steuerventil 74 in einen geöffneten Zustand geschaltet. Dadurch wird der über die pneumatische Steuerleitung 110 aus der Pneumatikhauptleitung 60 anstehende Druck über das Steuerventil 74 und die Entsperrleitung 130 an das entsperrbare Rückschlagventil 64 - nämlich konkret an den Steuerraum III.1 der Steuerkammer III- weitergegeben und aktuiert so den Steuerkolben 640 in Richtung des Sperrventilkörpers 620, ohne jedoch den Sperrventilkörper zu aktuieren, d. h . der Sperrventilkörpers 620 verbleibt auf dem Sperrventilsitz 610 und schließt den Austritt A1. Aufgrund der einstückigen Ausbildung des Steuerkolbens 640 mit dem Entlüftungsventilkörper 680 wird jedoch der Entlüftungsventilkörper 680 aktuiert, also die Entlüftungsventildichtung 681 vom Entlüftungsventilsitz 680 abgehoben und der Austritt A4 der Entlüftungskammer VI freigegeben. Dadurch wird das Rückschlagventil 64 noch nicht entsperrt, jedoch bereits das in Baueinheit mit dem Rückschlagventil 64 gebildete Entlüftungsventil 73 durch Freigabe sowohl des in Fig. 8B gezeigten Austritts A4 als auch des Eintritts A3 der Entlüftungskammer VI der Entlüftungsrichtung ER geöffnet. Konkret befindet sich der Anschlag der Anschlagfläche 641 des Steuerkolbens 640 noch nicht an der Sitzfläche 621 des Sperrventilkörpers 620, die Entlüftungsventildichtung 681 aber bereits in Distanz zum Entlüftungsventilsitz 670 und vorteilhaft jenseits des Eintritts A3 der Entlüftungskammer IV. Der Sperrventilkörper 620 wird durch die Druckkraft der Ventilfeder 630 noch auf dem Sperrventilsitz 610 gehalten. Der Entlüftungsventilkörper 680 wird mit seiner Entlüftungsventildichtung 681 vom Entlüftungsventilsitz 670 abgehoben und gibt so den Weg für eine Druckluftströmung *D̅* in Entlüftungsrichtung ER aus dem Trockner 61 und ggf. der Druckluftzuführung 52 vom Eintritt A3 (Druckluftzuführungs-Schnittstelle E1) über die Entlüftungskammer IV zum Austritt A4 (Entlüftungs-Schnittstelle E3) des Rückschlagventils 64 frei.

Die Druckluftströmung *D̅* verläuft dann vom Austritt A4 zum Entlüftungsanschluss 3 über die Entlüftungsleitung 70, wie dies anhand von Fig. 8A gezeigt ist. In dem Fall ist also der Lufttrockner 61 zum Entlüftungsanschluss 3 über den Druckluftzuführungsanschluss 52 schon einen Spalt weit geöffnet während der Steuerkolbens 640 aber im Rückschlagventil 64 allenfalls an der Sitzfläche 621 des Sperrventilkörpers 620 nur (fast) anliegt, d. h. dass die Galerie 96 durch das Rückschlagventil 64 gerade noch geschlossen ist; das Rückschlagventil 64 ist also - im Unterschied zur in Fig. 9B dargestellten Stellung - noch nicht geöffnet.

Das ergibt eine akustisch besonders bevorzugte Hochdruck-Entlüftungs-Funktion, die sonst zusätzlich über ein separates Hochdruckentlüftungsventil realisiert werden müsste: erst wenn der Druck im Trockner 61 weit genug gesunken ist, reicht die Kraft des Steuerkolbens 640 aus, um im Rückschlagventil 64 den Austritt A1 ebenfalls zu öffnen indem der Steuerkolben 640 den Sperrventilkörper 620 vom Sperrventilsitz 610 hebt. Diese zeitliche Abfolge lässt sich durch eine gezielte Auslegung der Kräfte, Flächen und Hübe im Rückschlagventil 64 erreichen.
Das vorliegende Rückschlagventil 64 mit Steuerkolben 640 als Ventilbaugruppe mit einem Entlüftungsventilkörper 680 des Entlüftungsventils 73 ist bereits gut dafür geeignet. Dabei ist vorgesehen, dass der Entlüftungsventilkörper 680 mit dem Steuerkolben 640 einen einstückigen Stößel bildet, dessen Länge geringer ist als ein Abstand zwischen einem Entlüftungsventilsitz 670 der Entlüftungskammer IV und einem Sperrventilsitz 610 der Sperrkammer I und größer ist als ein Abstand zwischen Sperrventilsitz 610 der Sperrkammer I und einem Eintritt A3 der Entlüftungskammer IV.

Vorteilhaft wird in der Hochdruckentlüftungsstellung lediglich ungetrocknete Luft im Trockner 61 soweit abgelassen, bis die Kraft des Steuerkolbens 640 ausreicht, das Rückschlagventil 64 aufzudrücken und zur Galerie 96 zu öffnen. Damit ist ein Speicherfüllen-Ende ohne zusätzlichen Schaltungsaufwand akustisch weitgehend optimiert, denn der Trocknerinnendruck steuert seine mehr oder weniger geräuschvolle Entlüftung selbst.

Für normale Entlüftungsvorgänge mit nahezu leerem Lufttrockner 61 und Druck in der Galerie 96, z. B. aus den Bälgen 91, gibt es dagegen keine Einschränkungen. Kombiniert mit einem -hier nicht gezeigten- stromlos offenen Entlüftungsventils 73 liegt eine besonders einfache Abwandlung vor, die auch mit einer breiten Palette von Nennweiten für die Austritte A1 und A4 - z. B. zwischen 0,8 ... 4,0mm - realisiert werden kann. Besonders attraktiv beruhen beide Varianten -stromlos geschlossenes oder offenes Entlüftungsventil 73- auf einer weitgehend gekoppelten Bewegung des Steuerkolbens 640 und Entlüftungsventilkörper 680 unter positiver Beeinflussung der Akustik.

Fig. 9A und Fig. 9B zeigen ebenfalls im Unterschied zu Fig. 1 bis Fig. 4 die Druckluftversorgungsanlage 20 und das dazugehörige Rückschlagventil 64 in einem Entsperrbetrieb, welcher zeitlich nach dem eben beschriebenen Hochdruckentlüftungsbetrieb folgt. Dazu ist unter Bezug auf Fig. 9A bei der Druckluftversorgungsanlage 20 das Steuerventil 74 in einen geöffneten Zustand geschaltet. Dadurch wird der über die pneumatische Steuerleitung 110 aus der Pneumatikhauptleitung 60 anstehende Druck über das Steuerventil 74 und die Entsperrleitung 130 an das entsperrbare Rückschlagventil 64 - nämlich konkret an den Steuerraum III.1 der Steuerkammer III - weitergegeben und aktuiert so den Steuerkolben 640 in Richtung des Sperrventilkörpers 620. Aufgrund der einstückigen Ausbildung des Steuerkolbens 640 mit dem Entlüftungsventilkörper 680 wird auch der Entlüftungsventilkörper 680 aktuiert, also die Entlüftungsventildichtung 681 vom Entlüftungsventilsitz 680 abgehoben.

Dadurch wird einerseits das Rückschlagventil 64 mechanisch entsperrt und gleichzeitig das in Baueinheit mit dem Rückschlagventil 64 gebildete Entlüftungsventil 73 geöffnet. Konkret wird dazu einerseits durch Anschlag der Anschlagfläche 641 des Steuerkolbens 640 an die Sitzfläche 621 des Sperrventilkörpers 620 der Sperrventilkörper 620 gegen die Druckkraft der Ventilfeder 630 vom Sperrventilsitz 610 abgehoben. D. h. der Steuerkolben 640 wirkt auf den Sperrventilkörper 620 unmittelbar mechanisch und hebt diesen vom Sperrventilsitz 610 des Rückschlagventils 64 ab. Grundsätzlich eignet sich darüber hinaus auch eine andere je nach Bedarf zweckmäßige Bewegung des Steuerkolbens 640 um den Sperrventilkörper 620 unmittelbar oder mittelbar vom Sperrventilsitz 610 des Rückschlagventils 64 abzuheben.

Für diesen Fall eines Entsperrbetriebs wird das entsperrbare Rückschlagventil 64 mechanisch entsperrt; nämlich aufgrund der direkten mechanischen Einwirkung bzw. des direkten Anschlags des Steuerkolben 640 mit seiner Anschlagfläche 641 auf den Sperrventilkörper 620. Eine Aktuierung des Steuerkolbens 640 erfolgt dabei pneumatisch über das erläuterte Steuerventil 74.

Dazu ist vorliegend auch vorgesehen, dass die dem Entlüftungsraum zugewandte Seite 642.2 des Ringwulstes 642 über die Steuerfeder 660 an einem nicht näher bezeichneten Anschlag im Gehäuse 650 anschlägt. Eine in Entlüftungsrichtung ER vom Druckluftanschluss 2 und der Pneumatikanlage 90 kommende Druckluftströmung *D̅* kann somit in der durch Pfeile gezeigten Weise und - ähnlich wie anhand von Fig. 4 erläutert - die Sperrkammer I sowie die jetzt mit der Sperrkammer I pneumatisch verbundene Durchflusskammer II durchströmen. Außerdem gelangt die Druckluftströmung *D̅* weiter über die Pneumatikhauptleitung 60 zum Lufttrockner 61. Die Pneumatikhauptleitung 60 kann - wie vorliegend in Fig. 7B gezeigt - mit Querschnitten eines als Drossel 62 der Fig. 1 dienenden Eintritts A0 der Sperrkammer I und insbesondere Austritts A1 der Sperrkammer I am Sperrventilsitz 610 und eines Austritts A2 der Durchflusskammer II gebildet sein. D. h. die Eintritte bzw. Austritte A0, A1, A2 können zur Realisierung einer beispielhaft in Fig. 1, Fig. 2 gezeigten Drossel 62 genutzt werden.

Außerdem wird der Entlüftungsventilkörper 680 mit seiner Entlüftungsventildichtung 681 vom Entlüftungsventilsitz 670 abgehoben und gibt so den Weg für die Druckluftströmung *D̅* in Entlüftungsrichtung ER von der Druckluftzuführungs-Schnittstelle E1 (in Fig. 8B Eintritt A3) über die Entlüftungskammer IV zur Entlüftungs-Schnittstelle E3 (in Fig. 8B Austritt A4) des Rückschlagventils 64 frei. Die Druckluftströmung *D̅* verläuft von der Entlüftungs-Schnittstelle E3 (Austritt A4) zum Entlüftungsanschluss 3 über die Entlüftungsleitung 70, wie dies anhand von Fig. 9A gezeigt ist.

Aus der Detaildarstellung der Fig. 9B ist ersichtlich, dass die erste Drossel 62 und die zweite Drossel 72, wie sie in Fig. 5A und Fig.5B symbolisch dargestellt sind, durch geeignete Nennweiten von Entlüftungs-Schnittstelle E3 (Austritt A4) im Rückschlagventil 64 in Baueinheit mit einem Entlüftungsventil 73 der Fig. 9B realisiert sind. Die durch den Querschnitt des Steuerkolbens 640 verringerte Nennweite des Sperrventilsitzes 610 am Gehäuse 650 im Durchgang zwischen Durchflusskammer II und Sperrkammer I bestimmt dabei die Nennweite der ersten Drossel 62, wie es durch den Kreis in Fig. 9B angedeutet ist. Die Nennweite der in Fig. 1, Fig. 2 gezeigten zweiten Drossel 72 wird durch die Nennweite der Entlüftungs-Schnittstelle E3 (Austritt A4) am Ausgang der Entlüftungskammer IV bestimmt. Mit Vorteil ist vorliegend - insbesondere im Unterschied zum Steuerkolben 640 der Fig. 4 - eine Anschlagfläche 641 des Steuerkolbens 640 beim Rückschlagventil 64, abgestuft ausgeführt. Der Steuerkolben 640 weist dazu - gemäß Fig.7B ersichtlich - auf seiner dem Sperrventilkörper 620 zugewandten Seite einen distalen ersten Abschnitt 640.1 und einen proximalen zweiten Abschnitt 640.2 auf, wobei die Querschnittsfläche des ersten Abschnitts 640.1 geringer als die Querschnittsfläche des zweiten Abschnitts 640.2 ist. Dies führt dazu, dass bei voller Auslenkung des Steuerkolbens 640 die Querschnittsfläche des zweiten Abschnitts 640.2 die Nennweite des Austritts A1 im Übergang zwischen Sperrkammer I und Durchflusskammer II bestimmt - also zu einer vergleichsweise engen Drosselnennweite der Drossel 62 führt. Bei nur teilweiser Auslenkung des Steuerkolbens 640 kommt dagegen nur der vergleichsweise geringe Querschnitt des ersten Abschnitts 640.1 zur Einschränkung der Nennweite des Austritts A1 zwischen Sperrkammer I und Durchflusskammer II zum Tragen. Dieses führt dazu, dass bei nur teilweiser Auslenkung des Steuerkolbens 640 die Nennweite der ersten Drossel 62 größer ist als bei voller Auslenkung des Steuerkolbens 640. Im Ergebnis führt die vorliegend abgestufte Anschlagfläche 641 des Steuerkolbens mit abgestuftem Querschnitt zu einer stufenweise einstellbaren Drosselnennweite der ersten Drossel 62. Unter Nutzung der Vorgabe eines Steuerdrucks über die Entsperrleitung 130 in Kombination mit der Entlüftung über die Entlüftungs-Zweigleitung 170.1 kann diese Konstruktion des Steuerkolbens 640 genutzt werden, um über die Drosselnennweite eine für die Regeneration des Lufttrockners 61 günstige Druckwechselamplitude einzustellen, d. h. insbesondere ein für die Aufnahme von Feuchte aus dem Lufttrockner 61 vorteilhaft niedriges Druckniveau bei der Druckluftströmung *D̅* in Entlüftungsrichtung ER einzustellen. Ein weiterer wesentlicher Vorteil der mit erstem und zweiten Abschnitt 640.1 und 640.2 erreichbaren abgestuften Querschnittsflächen besteht darin, dass beim Durchflussbetrieb -also Fördern von Druckluft in Befüllrichtung BR bei unbetätigtem Steuerkolben 640- ein vergleichsweise großer drosselfreier Querschnitt am Austritt A1 zu Verfügung steht. Diese Stellung der Druckluftversorgungsanlage kann z. B. zum Leeren der Galerie 96 und der Druckluftversorgungsanlage 20 nach Befüllen der Bälge 91 und/oder des Speichers 92 dienen.

Eine deutlich verbesserte Regeneration des Lufttrockners 61 ergibt sich auch im Rahmen des zeitlichen Ablaufs beim Schließen des u. a. mittels dem Sperrventilsitz 610, dem Sperrventilkörper 620 und der Ventilfeder 630 gebildeten Rückschlagventils, was sich beispielsweise nach Befüllen der Bälge 91 und/oder des Speichers 92 ergibt. Wesentlich ergibt sich dabei eine Restdruckhaltefunktion, welche aufgrund des mit der Steuerfeder 660 federbelasteten Steuerkolbens 640 bewirkt wird, da die Steuerfeder 660 auf die dem Entlüftungsraum III.2 zugewandte zweite Seite 642.2 des Ringwulstes 642 wirkt und so den Steuerkolben 640 im Gleichgewicht aufgrund des federbelasteten Ringwulstes 642 gegen einen System- oder Steuerdruck Pₛ in Steuerraum III.1 der Steuerkammer III, d. h. gegen einen Rückhaltedruck P_{R} in der Galerie 95. Der System- oder Steuerdruck Pₛ liegt im Steuerraum III.1 --wie beispielsweise in Fig. 6C und Fig. 6F gezeigt-- über eine von der Pneumatikhauptleitung 60 abzweigende pneumatische Steuerleitung 110 und weiter über die pneumatische Entsperrleitung 130 am Steuerraum III.1 der Steuerkammer III an.

Anhand der mit Fig. 8A, Fig. 8B erläuterten Hochdruckentlüftungsfunktion zur Entlüftung des Lufttrockners 61 wird bereits in Entlüftungsrichtung ER beim Öffnen des mittels Sperrventilsitz 610, dem Sperrventilkörper 620 und der Ventilfeder 630 gebildeten Rückschlagventils zunächst der Trocknerausgang des Lufttrockners 61 auf Seiten der Entlüftungsleitung 70 bzw. des Druckluftzuführungsanschlusses 52 geöffnet bevor das Rückschlagventil öffnet, d. h. bevor der Sperrventilkörper 620 vom Sperrventilsitz 610 abgehoben wird. Bei der Hochdruckentlüftungsfunktion wird zunächst ungetrocknete Luft im Lufttrockner 61 abgelassen und danach das genannte Rückschlagventil aufgedrückt, um auch die Galerie 96 zum weiteren Ablassen von Druckluft aus dem System zu öffnen.

Umgekehrt unterliegt auch das Schließen des mittels Sperrventilsitz 610, dem Sperrventilkörper 620 und der Ventilfeder 630 gebildeten Rückschlagventils einem Zeitablauf, der sich aus den Abmessungen des Entlüftungsventilkörpers 680 und des Steuerkolbens 640 im Zusammenspiel mit dem System- oder Steuerdruck Pₛ ergibt. Das Schließen des genannten Rückschlagventils vollzieht sich in Folge eines Druckabfalls im System, d.h. auch der Galerie 96. Infolgedessen schließt zuerst das genannte Rückschlagventil (d. h. der Sperrventilkörper 620 setzt auf den Sperrventilsitz 610 auf) und erst danach schließt das Entlüftungsventil 73 (d. h. der Entlüftungsventilkörper 680 setzt auf den Entlüftungsventilsitz 670 auf). Zwischen dem Aufsetzen des Sperrventilkörpers 620 und dem Aufsetzen des Entlüftungsventilkörpers 680 liegt ein Zeitraum, der zum Einen dadurch kennzeichnet ist, dass der Systemdruck P_{S}, d. h. der Druck in der Galerie 95 weitgehend auf einem Niveau stehenbleibt und zum Anderen kann der Lufttrockner 61 zum Trocknerausgang hin, d. h. in Richtung der Entlüftungsleitung 70, vollständig entleert werden. Aufgrund des bei geschlossenem Rückschlagventil zeitweise stagnierenden Systemdrucks steht somit der System- bzw. Steuerdruck P_{S} weitgehend unverändert in der Steuerleitung 110 und dem Steuerraum III.1 an und liegt im Bereich des durch die Steuerfeder 660 bewirkten Restdrucks bzw. Rückhaltedrucks P_{R}. So wird das Entlüftungsventil 73 vergleichsweise lange offen gehalten, d. h. der Entlüftungsventilkörper 680 ist für einen gewissen, vergleichsweise langen Zeitraum beabstandet vom Entlüftungsventilsitz 670. Das Rückschlagventil 64 übernimmt nunmehr die Dichtfunktion zur Galerie 96 und der Eingang des Lufttrockners 61, d. h. der Eingang des Lufttrockners 61 zur Durchflusskammer II bzw. Galerie 96 wird zuerst geschlossen. Dies hat den Vorteil, dass die gesamte verfügbare Luft zur Regeneration des Lufttrockners 61 genutzt werden kann. Dies hat grundsätzlich eine verbesserte Regeneration des Lufttrockners 61 zur Folge. Die verbesserte Regeneration ist auch voll wirksam selbst bei geringem System- bzw. Steuerdruck P_{S} aus der Galerie 96 zum Steuerraum III.1. Diesem weiter zuträglich ist auch die oben erläuterte Staffelung des ersten und zweiten Abschnitts 640.1, 640.2 am Steuerkolben 640, so dass beim Schließen des mittels Sperrventilsitz 610, dem Sperrventilkörper 620 und der Ventilfeder 630 gebildeten Rückschlagventils eine vergleichsweise geringe Nennweite bei der Druckluftströmung *D̅* in Entlüftungsrichtung ER eingestellt wird, dies um für den Lufttrockner 61 ein vorteilhaft niedriges Druckniveau zur Aufnahme von Feuchte aus dem Lufttrockner 61 zur Verfügung zu stellen. D. h. die vorgenannte verbesserte Regeneration in Folge der Restdruckhaltefunktion wird auch bei vergleichsweise geringen Vorsteuerdrücken in der Steuerleitung 110 erreicht. Dies ist regelmäßig der Fall bei geringen Balgdrücken, d. h. bei Drücken nahe des Rückhaltedrucks P_{R}, der einem Restdruck entspricht, dem die mechanische Kraft der Steuerfeder 660 entgegen wirkt. Bei der vorgenannten Ausführungsform besteht im Unterschied zum Stand der Technik somit selbst bei vergleichsweise geringen Steuerdrücken nicht mehr die Gefahr einer mangelnden Regeneration.

Die vorgenannte vollständige Entleerung des Lufttrockners 61 bei bereits geschlossenem Rückschlagventil und noch offenem Entlüftungsventil 73 in Entlüftungsrichtung ER hat zur Folge, dass der Lufttrockner 61 vollständig entleert wird. Ein leerer Lufttrockner 61 ist grundsätzlich vorteilhaft, um einen vergleichsweise geringen geräuscharmen Anlauf eines Luftverdichters 51 wie beispielsweise eines Kompressors, der Druckluftversorgungsanlage 10, 11, 12, 20, 20', 20", 30 zu ermöglichen. Unabhängig von Maßnahmen in der Galerie 96 ist ein solcher druckloser Anlauf immer sichergestellt bei der vorliegenden Ausführungsform, da das mittels Sperrventilsitz 610, dem Sperrventilkörper 620 und der Ventilfeder 630 gebildete Rückschlagventil 64 als Dichtelement zwischen dem Lufttrockner 61 und der Galerie 96 sitzt.

Im Einzelnen wird die so erreichte Restdruckhaltefunktion anhand eines zeitlichen Ablaufs von Bewegungszuständen des Steuerkolbens 640 mit Entlüftungsventilkörper 680 erläutert, der sich in Folge eines fallenden System- oder Steuerdrucks P_{S} von einem Zustand des entsperrbaren Rückschlagventils 64 der Fig. 9B zu einem Zustand der Fig. 8B und dann in einen Zustand der Fig. 6F entwickelt.

D. h. bei einem zunächst deutlich über einem Rückhaltedruck P_{R} liegenden Steuer- oder Systemdruck P_{S} nimmt der Steuerkolben 640 des Rückschlagventils 64 eine in Fig. 9B gezeigte Stellung ein, die als Entsperrbetrieb bezeichnet ist. Bei P_{S} > P_{R} ist das Steuerventil 74 geschaltet und sowohl der Entlüftungsventilkörper 680 als auch der Sperrventil 620 vom jeweiligen Ventilsitz abgehoben.

Bei einem in Fig. 8B für eine Schließbewegung SB des Steuerkolbens 640 gezeigten Schaltzustand wird die Restdruckhaltefunktion wirksam, indem das Steuerventil 74 noch geschaltet ist und der Steuerkolben 640 bei fallendem Druck in der Galerie 95 in eine Schließbewegung übergeht, bei der der Sperrventilkörper 620 bereits auf dem Ventilsitz 610 sitzt; dies bei einem System- oder Steuerdruck P_{S}, der etwa gleich dem Resthaltedruck P_{R} ist. Der zur Entlüftungsleitung 70 geöffnete Trocknerausgang des Lufttrockners 61 ermöglicht somit bei geschlossener Galerie 96 ein vollständiges Entlüften des Lufttrockners 61; dies auch deswegen, weil aufgrund des geschlossenen Sperrventilkörpers 620 auf dem Sperrventilsitz 610 der System- oder Steuerdruck P_{S} konstant gehalten ist. Der Steuerkolben 640 ist somit einem vergleichsweise lang anhaltendem System- oder Steuerdruck P_{S} ausgesetzt, der in etwa gleich dem Resthaltedruck P_{R} ist. Dies führt zu einer vergleichsweise langen Phase in welcher der vorgenannte Ausgang des Lufttrockners 61 zur Entlüftungsleitung 70 geöffnet bleibt.

Nach dem in Fig. 8B für eine Schließbewegung SB gezeigten Zustand geht das mittels Sperrventilsitz 610, dem Sperrventilkörper 620 und der Ventilfeder 630 gebildete Rückschlagventil 64 dann in eine in Fig. 6F gezeigte Stellung über, bei dem der Steuerraum III.1 entlüftet wird unter Schalten des Steuerventils 74; d. h. unter Ablassen des Rückhaltedrucks P_{R}. In diesem Zustand ist der Steuerkolben 640 in seiner vollständig geschlossenen Position, d. h. der Sperrventilkörper 620 sitzt auf dem Sperrventil 610 und der Entlüftungsventilkörper 680 sitzt auf dem Entlüftungsventilsitz 670. Der Lufttrockner 61 ist damit am galerieseitigen Eingang als auch am entlüftungsleitungsseitigen Ausgang geschlossen. Dieser Zustand ist gekennzeichnet durch ein stromlos geschlossenes Steuerventil 74 und einem entlüfteten Steuerraum III.1 der Steuerkammer III, so dass nur noch die mechanische Kraft der Steuerfeder 660 auf den Steuerkolben 640 wirkt; der mögliche Rückhaltedruck P_{R} in der Galerie 95 ist davon nicht beeinflusst.

Bemerkenswert bei diesem Bewegungsablauf ist, dass sich eine Regeneration des Lufttrockners 61 ergibt, die gerade bei ansonsten als nachteilig angesehenen Systembedingungen eines geringen System- oder Steuerdrucks P_{S} besonders gut funktioniert; gegebenenfalls sogar besser als bei einer Regeneration im vollständig entsperrten Betrieb des Rückschlagventils 64 (Fig. 9B). Erreicht wird diese Funktion durch den erläuterten Zustand eines noch geöffneten Entlüftungsventils 73 bei bereits gesperrter Galerie 96 durch das Rückschlagventil 64, insbesondere in Kombination mit einer in diesem Zustand vergleichsweise gering eingestellten Nennweite der in Fig. 9B gezeigten Drossel 62. Im Ergebnis führt dies zu einer Druckluftversorgungsanlage 10, 11, 12, 20, 30 zum Betreiben einer Pneumatikanlage 90 mit einer Druckluftzuführung 1, einen Druckluftanschluss 2 zur Pneumatikanlage 90 und einem Entlüftungsanschluss 3 zur Umgebung, wobei eine Pneumatikhauptleitung 60 zwischen der Druckluftzuführung 1 und dem Druckluftanschluss 2 einen Lufttrockner 61 und ein Rückschlagventil 64 aufweist und eine Entlüftungsleitung 70 zwischen dem Druckluftanschluss 2 und dem Entlüftungsanschluss 3 angeordnet ist. Gemäß der vorgenannten insbesondere für die Restdruckhaltefunktion bevorzugt ausgebildeten Ausführungsform ist das Rückschlagventil 64 in Form eines entsperrbaren Rückschlagventils gebildet. Dieses weist einen mittels Entlüftungsventilkörper 680 und dem Steuerkolben 640 gebildeten einstückigen Stößel auf, dessen Länge geringer ist als ein Abstand zwischen einem Entlüftungsventilsitz 670 einer Entlüftungskammer IV und einem Sperrventil 610 einer Sperrkammer I des Rückschlagventils 64. Die Länge ist derart gewählt, dass --sei es bei fallendem oder sei es bei steigendem System- oder Steuerdruck P_{S} auf eine Steuerkammer III des Rückschlagventils 64-- der von der Pneumatikhauptleitung 60 ableitbare Steuerdruck Pₛ zur Steuerkammer III bei geschlossenem Sperrventilkörper 620 am Sperrventilsitz 610 ein Niveau erreicht, das in etwa dem Federdruck, d.h. Restdruck bzw. Rückhaltedruck P_{R}, einer Steuerfeder 660 am Steuerkolben 640 entspricht. Durch die vorgenannte vergleichsweise lang anhaltende Balance von Steuer- und Systemdruck Pₛ einerseits und Rückhaltedruck P_{R} andererseits wird ein Entlüftungsventilsitz 670 vergleichsweise lang offen gehalten, so dass eine vollständige Entleerung und gute Regeneration des Lufttrockners 61 erfolgen kann.

Fig. 10 zeigt eine besonders bevorzugte Konstruktion einer Druckluftversorgungsanlage 30 in Form einer Einrichtung mit einer Gehäuseanordnung, die eine Anzahl von Gehäusebereichen aufweist. In einem ersten Gehäusebereich A ist ein Antrieb in Form eines nicht näher dargestellten Motors M und in einem zweiten Gehäusebereich B der vom Motor M antreibbare Luftverdichter 51 mit einem im Verdichtungsraum 54 hin und her bewegbaren Kolben 55 angeordnet, wobei ein Drehantrieb des Motors M über eine Welle und ein Pleuel 56 auf den Kolben 55 übertragen wird. Im Verdichtungsraum 54 wird Luft über eine Luftzuführungs-Schnittstelle E0 der oben genannten Luftzuführung 0 zugeführt. Am Ausgang des Verdichtungsraums 54 befindliche Druckluft wird über ein Auslassventil 57 oder dgl. einer Druckluftzuführungsschnittstelle E1 für die oben genannte Druckluftzuführung 1 übergeben. Die Druckluft wird in einen dritten Gehäusebereich C der Druckluftversorgungsanlage 30 abgegeben. Der dritte Gehäusebereich C enthält den Lufttrockner 61 und - in einer Einbuchtung G der Wandung W des Trockenbehälters 58 - das Steuerventil 74 der Druckluftversorgungsanlage 30. Diese ist im Prinzip gemäß dem in Fig. 6C und Fig. 6D gezeigten Schaltbild aufgebaut, sodass für einander entsprechende Teile gleiche Bezugszeichen verwendet sind. Die Gehäusebereiche A, B, C sind über eine oder mehrere nicht näher bezeichnete Dichtungen gegeneinander abgedichtet. Den dritten Gehäusebereich C schließt bodenseitig ein Deckel T ab, welcher ein Rückschlagventil 63 oder 64 enthalten kann - vorliegend ist der Deckel T mit dem Rückschlagventil 64 dargestellt.

Der Deckel T bildet außerdem eine Druckluftversorgungs-Schnittstelle E2 für die oben genannte Druckluftzuführung 2 aus. Die Druckluftversorgungs-Schnittstelle E2 ist pneumatisch an den Austritt A2 zur Durchflusskammer II pneumatisch angebunden über die auch ein Befüllen einer Pneumatikanlage 90 in Befüllrichtung BR erfolgt (z. B. gem. Fig. 7B). Der Deckel T bildet auch eine Entlüftungs-Schnittstelle E3 für den oben in Fig. 1 gezeigten Entlüftungsanschluss 3 - gemäß Fig.6D am Eintritt A3 der Entlüftungskammer IV angeschlossen- aus. Die Entlüftungs-Schnittstelle E3 ist mit der Entlüftungs-Zweigleitung 170.1 und der Entlüftungsleitung 170 zur Anbindung an einen Entlüftungsraum III.2 der Steuerkammer III pneumatisch angebunden. Ein Steuerdruck zur Entlüftung wird von E2 über die Steuerleitung 110 dem Steuerventil 74 beaufschlagt, das diesen über den Ventilsitz 74A und die Entsperrleitung 130 an die Steuerkammer III gibt. Der Deckel T bildet auch eine nicht näher bezeichnete elektrische Steuer-Schnittstelle S zur Anbindung der oben genannten Steuerleitung 83 an das Steuerventil 74 aus. Der Deckel T ist in seinen Maßen weitgehend kongruent mit einer Bodenkontur des Trockenbehälters 58 und kann praktisch passgenau auf den Trockenbehälter 58 aufgesetzt werden.

Der Eintritt A3 der Entlüftungskammer IV des Rückschlagventils 64 ist in der Fig. 10 auch der Entlüftungs-Schnittstelle E3 zugeordnet. Der Austritt A4 ist wie in Fig. 7B bezeichnet und gemäß dem Schaltbild der Fig. 7A angeordnet. Ein in Entlüftungsrichtung ER beaufschlagter Austritt A4 der Entlüftungskammer IV ist in Fig. 10 auch der Druckquellen-Schnittstelle E1 zugeordnet. Auf diese Weise kann, wie erläutert, das Rückschlagventil 64 - oder in einer hier nicht gezeigten Ausführungsform auch das Rückschlagventil 63 - in einer Druckluftversorgungsanlage 30 konstruktiv vorteilhaft integriert werden. Insgesamt lässt sich die Druckluftversorgungsanlage 30 mit dem Steuerventil 74 und einem Rückschlagventil 63, 64 kompakt und bauraumsparend zur Verfügung stellen. Insbesondere wird vorliegend der dritte Gehäusebereich C durch den Trockenbehälter 58 des Lufttrockners 61 gebildet, welcher das Trockengranulat enthält. Das Trockengranulat wird durch eine Feder F im Trockenbehälter 58 unter Druck gehalten. Die Wandung W bildet, wie oben erläutert, bodenseitig des Trockenbehälters 58 eine symmetrisch, d. h. hier mittig und parallel, zur Achse des Trockenbehälters 58 angeordnete Einbuchtung G, die frei von Trockenmittel ist. Die Einbuchtung G kann somit bauraumsparend und durch den Trockenbehälter 58 geschützt das Steuerventil 74 aufnehmen und mit dem Deckel T verschlossen sein. Das Steuerventil 74 weist dazu einen Ventilsitz 74A auf, der durch eine an einem Ventilanker 74B angeordnete Ventildichtung 74C verschlossen werden kann. Das vorliegend stromlos geschlossene Steuerventil 74 kann durch Bestromung der Spule 74D mit einem über die Steuerleitung 83 an die Spule 74D über die Steuer-Schnittstelle S abgegebenen Steuersignal bestromt werden. Der Ventilanker 74B kann so vom Ventilsitz 74C gegen die Federkraft einer Ventilfeder 74E abgehoben werden. In dem Fall geht das Steuerventil 74 von einem beispielsweise in Fig. 6A und Fig. 7A gezeigten geschlossenen Zustand in einen in Fig. 9A gezeigten geöffneten Zustand über, um das Rückschlagventil 64 zu entsperren, d. h. in den in Fig. 9B gezeigten Entsperrbetrieb zu versetzen.

Zusammenfassend betrifft die Erfindung eine Druckluftversorgungsanlage 10, 11, 12, 20, 30 zum Betreiben einer Pneumatikanlage 90, insbesondere einer Luftfederanlage eines Fahrzeugs, aufweisend:
- eine Druckluftzuführung 1,
- einen Druckluftanschluss 2 zur Pneumatikanlage 90,
- einen Entlüftungsanschluss 3 zur Umgebung,
- eine erste pneumatische Verbindung zwischen der Druckluftzuführung 1 und dem Druckluftanschluss 2, die einen Lufttrockner 61 und ein Trennventil aufweist,
- eine zweite pneumatische Verbindung zwischen dem Druckluftanschluss 2 und dem Entlüftungsanschluss 3. Erfindungsgemäß ist dabei vorgesehen, dass das Trennventil mit einem pneumatisch entsperrbaren Rückschlagventil 63, 64 gebildet ist.

### Bezugszeichenliste (Bestandteil der Beschreibung)

- 0: Luftzuführung
- 0.1: Luftfilter
- 0.3: Filter
- 1: Druckluftzuführung
- 2: Druckluftanschluss
- 3: Entlüftungsanschluss
- 10, 11, 12, 20, 20', 20", 30: Druckluftversorgungsanlage
- 51: Luftverdichter
- 52: Druckluftzuführungsanschluss
- 53: Zweiganschluss
- 54: Verdichtungsraum
- 55: Kolben
- 56: Pleuel
- 57: Auslassventil
- 58: Trockenbehälter
- 60: Pneumatikhauptleitung
- 61: Lufttrockner
- 62: erste Drossel
- 63, 64: Rückschlagventil
- 63': Drosselrückschlagventil
- 70, 70': Entlüftungsleitung
- 72: zweite Drossel
- 73: Entlüftungsventil
- 74: Steuerventil
- 74A: Ventilsitz
- 74B: Ventilanker
- 74C: Ventildichtung
- 74D: Spule
- 74E: Ventilfeder
- 75: Druckbegrenzung
- 76: einstellbare Feder des Entlüftungsventils
- 77: Zweiganschluss
- 80: Magnetventilanordnung
- 82: Spule
- 83: Steuerleitung
- 90: Pneumatikanlage
- 91: Balg
- 92: Speicher
- 93: Magnetventil
- 94: Magnetventil
- 95: Galerie
- 96: weitere Pneumatikleitung
- 97: Ventilblock
- 98: Feder-Zweigleitung
- 99: Speicher-Zweigleitung
- 100, 200, 300: pneumatisches System
- 110: pneumatische Steuerleitung
- 130: pneumatische Entsperrleitung
- 130.1: erste Entsperr-Zweigleitung
- 130.2: zweite Entsperr-Zweigleitung
- 170: weitere Entlüftungsleitung
- 170.1: Entlüftungs-Zweigleitung
- 610: Sperrventilsitz
- 620: Sperrventilkörper
- 621: Sitzfläche
- 630: Ventilfeder
- 640, 640': Steuerkolben, Doppelrelaiskolben
- 640.1: erster Abschnitt
- 640.2: zweiter Abschnitt
- 641, 641': Anschlagfläche, Relais-Entsperrkörper
- 642: Ringwulst
- 642.1: Steuerraum zugewandte erste Seite der Ringwulst 642
- 642.2: Entlüftungsraum zugewandte zweite Seite der Ringwulst 642
- 643: Sitzfläche
- 644: Steuersitz
- 650: Gehäuse
- 651: Dichtung
- 652: Trenndichtung
- 653: Dichtung
- 660: Steuerfeder
- 670: Entlüftungsventilsitz
- 680, 680': Entlüftungsventilkörper, Relais-Entlüftungsventilkörper
- 681: Entlüftungsventildichtung
- A: erster Gehäusebereich
- B: zweiter Gehäusebereich
- C: dritter Gehäusebereich
- A0: Eintritt der Sperrkammer I
- A1: Austritt A1 der Sperrkammer I
- A2: Austritt der Durchflusskammer II
- A3: Eintritt der Entlüftungskammer IV
- A4: Austritt der Entlüftungskammer IV
- *D̅*: Druckluftströmung
- ER: Entlüftungsrichtung
- BR: Befüllrichtung
- E0: Luftzuführungs-Schnittstelle
- E1: Druckluftzuführungs-Schnittstelle
- E2: Druckluftversorgungs-Schnittstelle
- E3: Entlüftungs-Schnittstelle
- F: Feder
- G: Einbuchtung
- M: Motor
- OB: Öffnungsbewegung des Steuerkolbens 640
- Pₛ: System- oder Steuerdruck im Steuerraum III.1
- P_{R}: Rückhaltedruck in der Galerie 95
- S: Steuer-Schnittstelle
- SB: Schließbewegung des Steuerkolbens 640
- T: Deckel
- I: Sperrkammer
- II: Durchflusskammer
- III: Steuerkammer
- III.1: Steuerraum
- III.2: Entlüftungsraum
- IV: Entlüftungskammer

## Patentansprüche

1. Druckluftversorgungsanlage (10, 11, 12, 20, 30) zum Betreiben einer Pneumatikanlage (90), insbesondere einer Luftfederanlage eines Fahrzeugs, aufweisend:
- eine Druckluftzuführung (1),
- einen Druckluftanschluss (2) zur Pneumatikanlage (90),
- einen Entlüftungsanschluss (3) zur Umgebung,
- eine Pneumatikhauptleitung (60) zwischen der Druckluftzuführung (1) und dem Druckluftanschluss (2), die einen Lufttrockner (61) und ein Rückschlagventil aufweist,
- eine Entlüftungsleitung (70) zwischen dem Druckluftanschluss (2) und dem Entlüftungsanschluss (3),
**dadurch gekennzeichnet, dass**
das Rückschlagventil in Form eines entsperrbaren Rückschlagventils (63, 64) gebildet ist.

2. Druckluftversorgungsanlage nach Anspruch 1,
**dadurch gekennzeichnet, dass** das Rückschlagventil (63, 64) pneumatisch und/oder mechanisch entsperrbar ist.

3. Druckluftversorgungsanlage nach Anspruch 1 oder 2,
**dadurch gekennzeichnet, dass** die Pneumatikhauptleitung (60) und die Entlüftungsleitung (70) als separate Leitungen an einen gemeinsamen Druckluftzuführungsanschluss (52) angeschlossen sind.

4. Druckluftversorgungsanlage nach einem der Ansprüche 1 bis 3,
**dadurch gekennzeichnet, dass** das entsperrbare Rückschlagventil (63, 64) zwischen dem Lufttrockner (61) und dem Druckluftanschluss (2) in der Pneumatikhauptleitung (60) angeordnet ist.

5. Druckluftversorgungsanlage einem der Ansprüche 1 bis 4,
**dadurch gekennzeichnet, dass** die Pneumatikhauptleitung (60) eine Drossel (62) und das entsperrbare Rückschlagventil (63) in einer pneumatischen Reihenschaltung aufweist oder das entsperrbare Rückschlagventil in Form eines Drosselrückschlagventils (63') gebildet ist, das entsperrbar ist.

6. Druckluftversorgungsanlage nach einem der Ansprüche 1 bis 5, weiter aufweisend:
- ein Steuerventil (74),
- eine pneumatische Steuerleitung (110) zwischen der Pneumatikhauptleitung (60) und dem Steuerventil (74), wobei
- über das Steuerventil (74) mit einem von der Pneumatikhauptleitung (60) über die pneumatische Steuerleitung (110) abgeleiteten Druck das entsperrbare Rückschlagventil (63, 64) entsperrbar ist.

7. Druckluftversorgungsanlage nach Anspruch 6,
**dadurch gekennzeichnet, dass**
unter Druckbeaufschlagung einer pneumatischen Entsperrleitung (130) zwischen dem Steuerventil (74) und dem entsperrbaren Rückschlagventil (63, 64), insbesondere über die pneumatische Steuerleitung (110), das entsperrbare Rückschlagventil (63, 64) entsperrbar ist.

8. Druckluftversorgungsanlage nach einem der Ansprüche 1 bis 7,
**dadurch gekennzeichnet, dass** ein Doppelrelaiskolben (640') derart druckbeaufschlagbar ist, dass das Rückschlagventil (63) entsperrbar und gleichzeitig ein Entlüftungsventil (73) betätigbar ist, insbesondere über zwei Betätigungselemente des Doppelrelaiskolben (640'), insbesondere über einen Relais-Entsperrkörper (641') und einen Relais-Entlüftungsventilkörper (680'), wobei die Betätigungselemente als einstückiger Körper oder als separate Körper ausgebildet sind.

9. Druckluftversorgungsanlage nach einem der Ansprüche 1 bis 8,
**dadurch gekennzeichnet, dass** das Rückschlagventil (63, 64)
- einerseits eine mit der Pneumatikhauptleitung (60) pneumatisch verbundene Sperrkammer (I), eine mit der Pneumatikhauptleitung (60) pneumatisch verbindbare Durchflusskammer (II) und einen Sperrventilsitz (610) zwischen Sperrkammer (I) und Durchflusskammer (II) sowie einen den Sperrventilsitz (610) im Sperrbetrieb abschließenden und im Entsperrbetrieb freigebenden Sperrventilkörper (620) aufweist, und
- anderseits eine mit einer Steuerleitung (110), insbesondere über eine pneumatische Entsperrleitung (130), pneumatisch verbundene Steuerkammer (III) aufweist, die von der Durchflusskammer (II) getrennt ist und mittels der ein auf den Sperrventilkörper (620) wirkender Steuerkolben (640) aktuierbar ist.

10. Druckluftversorgungsanlage nach Anspruch 8 oder 9,
**dadurch gekennzeichnet, dass** eine Steuerkammer (III) des entsperrbaren Rückschlagventils (63, 64) durch eine am Steuerkolben (640) angeordnete Trenndichtung (652) aufgeteilt ist in einen mit einer Steuerleitung (110), insbesondere über eine pneumatische Entsperrleitung (130), pneumatisch verbundenen Steuerraum (III.1) und in einen Entlüftungsraum (III.2), die pneumatisch kommunizierend verbindbar sind, insbesondere einstellbar mittels des Steuerventils (74).

11. Druckluftversorgungsanlage nach Anspruch 10,
**dadurch gekennzeichnet, dass** der Steuerkolben (640) einen die Trenndichtung (652) tragenden Ringwulst (642) aufweist, der eine dem Entlüftungsraum (III.2) zugewandte zweite Seite (642.2) und eine dem Steuerraum (III.1) zugewandte erste Seite (642.1) aufweist, wobei eine entlüftungsraumseitige Fläche der zweiten Seite (642.2) kleiner als eine steuerraumseitige Fläche der ersten Seite (642.1) ist.

12. Druckluftversorgungsanlage nach einem der Ansprüche 10 oder 11,
**dadurch gekennzeichnet, dass** der Entlüftungsraum (III.2) der Steuerkammer (III) mit einer Steuerleitung (110), insbesondere über eine pneumatische Entsperrleitung (130), oder mit der Entlüftungsleitung (70) pneumatisch verbindbar ist, insbesondere einstellbar mittels dem Steuerventil (74) und/oder über eine weitere Entlüftungsleitung (170).

13. Druckluftversorgungsanlage nach einem der Ansprüche 1 bis 12,
**dadurch gekennzeichnet, dass**
die Entlüftungsleitung (70) wenigstens ein steuerbares Entlüftungsventil (73) aufweist und das steuerbare Entlüftungsventil (73) als indirekt schaltbares Relaisventil Teil einer Magnetventilanordnung (80) zur indirekten Schaltung eines Druckluftvolumens ist, wobei
die Magnetventilanordnung (80) ein Steuerventil (74) zur pneumatischen Steuerung des Relaisventils aufweist und das Steuerventil (74) in der pneumatischen Steuerleitung (110) einem von der Pneumatikhauptleitung (60) abgeleiteten Druck aussetzbar ist, und
zur pneumatischen Steuerung des Entlüftungsventils (73) und des entsperrbaren Rückschlagventils (63, 64) bzw. Drosselrückschlagventils (63') ausgebildet ist.

14. Druckluftversorgungsanlage nach Anspruch 13,
**dadurch gekennzeichnet, dass** das Entlüftungsventil (73) und/oder das Steuerventil (74) in Baueinheit mit dem entsperrbaren Rückschlagventil (63, 64) und/oder einer Drossel (62) bzw. einem Drosselrückschlagventil (63') gebildet ist.

15. Druckluftversorgungsanlage nach einem der Ansprüche 9 bis 14,
**dadurch gekennzeichnet, dass** das entsperrbare Rückschlagventil (64) anderseits eine mit der Entlüftungsleitung (70) pneumatisch verbindbare Entlüftungskammer (IV) aufweist und einen Entlüftungsventilsitz (670) zwischen Entlüftungskammer (IV) und Entlüftungsleitung (70) sowie einen den Entlüftungsventilsitz (670) im Sperrbetrieb abschließenden und im Entsperrbetrieb freigebenden Entlüftungsventilkörper (680) aufweist.

16. Druckluftversorgungsanlage nach Anspruch 15,
**dadurch gekennzeichnet, dass** der Entlüftungsventilkörper (680) mit dem Steuerkolben (640) einen einstückigen Stößel bildet, wobei der Entlüftungsventilkörper (680) anderseits einer Trenndichtung (652) eines Steuerkolbens (640) gebildet ist, insbesondere ein Steuerkolben (640) wenigstens einen ersten und zweiten abgestuften Abschnitt (640.1, 640.2) mit unterschiedlichen Querschnittsweiten aufweist.

17. Pneumatisches System (100, 200, 300) mit der Druckluftversorgungsanlage (10, 11, 12, 20, 30) nach einem der Ansprüche 1 bis 16 und einer Pneumatikanlage (90), die in Form einer Luftfederanlage gebildet ist, die eine Galerie (95) und wenigstens eine an der Galerie (95) pneumatisch angeschlossene Zweigleitung (98, 99) mit einem Balg (91) und/oder einem Speicher (92) sowie einem dem Balg (91) und/oder dem Speicher (92) vorgeordneten Wegeventil (93, 94) aufweist.

18. Verfahren zum Betreiben einer Pneumatikanlage (90), insbesondere einer Luftfederanlage eines Fahrzeugs, mittels einer Druckluftversorgungsanlage (10, 11, 12, 20, 30) nach einem der Ansprüche 1 bis 16, aufweisend die Schritte:
- Befüllen der Pneumatikanlage (90) mittels einer über eine Pneumatikhauptleitung (60), geführte Druckluftströmung aus der Druckluftversorgungsanlage (10, 11, 12, 20, 30), wobei ein entsperrbares Rückschlagventil (63, 64) in der Pneumatikhauptleitung (60) selbsttätig öffnet;
- Halten des Drucks in der Pneumatikanlage (90), wobei die Pneumatikhauptleitung (60) gegen eine Druckluftströmung aus der Pneumatikanlage (90) mittels dem entsperrbaren Rückschlagventil (63, 64) gesperrt wird, und
- Entlüften der Pneumatikanlage (90) mittels der über die Pneumatikhauptleitung (60) geführte Druckluftströmung aus der Pneumatikanlage (90), wobei das entsperrbare Rückschlagventil (63, 64) in der Pneumatikhauptleitung (60) entsperrt wird.

19. Verfahren nach Anspruch 18 weiter aufweisend die Schritte:
- Entsperren des Rückschlagventils (63, 64) mit einem von der Pneumatikhauptleitung (60) abgeleiteten Druck und
- pneumatisches Ansteuern eines Entlüftungsventils (73) in einer Entlüftungsleitung (70) mit dem von der Pneumatikhauptleitung (60) abgeleiteten Druck zum Entsperren des entsperrbaren Rückschlagventils (63, 64).

## Claims

1. Compressed air supply installation (10, 11, 12, 20, 30) for operating a pneumatic installation (90), in particular an air spring installation on a vehicle, having:
- a compressed air feed (1),
- a compressed air port (2) leading to the pneumatic installation (90),
- a vent port (3) leading to the environment,
- a main pneumatic line (60) between the compressed air feed (1) and the compressed air port (2), which line has an air dryer (61) and a nonreturn valve,
- a vent line (70) between the compressed air port (2) and the vent port (3),
**characterized in that**
the nonreturn valve is in the form of a pilot-operated nonreturn valve (63, 64).

2. Compressed air supply installation according to Claim 1,
**characterized in that** the nonreturn valve (63, 64) can be released pneumatically and/or mechanically.

3. Compressed air supply installation according to Claim 1 or 2,
**characterized in that** the main pneumatic line (60) and the vent line (70) are connected as separate lines to a common compressed air feed port (52).

4. Compressed air supply installation according to one of Claims 1 to 3,
**characterized in that** the pilot-operated nonreturn valve (63, 64) is arranged in the main pneumatic line (60) between the air dryer (61) and the compressed air port (2).

5. Compressed air supply installation according to one of Claims 1 to 4,
**characterized in that** the main pneumatic line (60) has a restrictor (62) and the pilot-operated nonreturn valve (63) in a pneumatic series circuit, or the pilot-operated nonreturn valve is in the form of a throttle check valve (63') that can be released.

6. Compressed air supply installation according to one of Claims 1 to 5, further having:
- a control valve (74),
- a pneumatic control line (110) between the main pneumatic line (60) and the control valve (74), wherein
- the pilot-operated nonreturn valve (63, 64) can be released by means of the control valve (74), using a pressure derived from the main pneumatic line (60) via the pneumatic control line (110).

7. Compressed air supply installation according to Claim 6,
**characterized in that**
the pilot-operated nonreturn valve (63, 64) can be released by pressurizing a pneumatic pilot operation line (130) between the control valve (74) and the pilot-operated nonreturn valve (63, 64), in particular via the pneumatic control line (110).

8. Compressed air supply installation according to one of Claims 1 to 7,
**characterized in that** a double relay piston (640') can be pressurized in such a way that the nonreturn valve (63) can be released and a vent valve (73) can simultaneously be actuated, in particular by means of two actuating elements of the double relay piston (640`), in particular via a relay release element (641`) and a relay vent valve element (680'), wherein the actuating elements are designed as an integral element or as separate elements.

9. Compressed air supply installation according to one of Claims 1 to 8,
**characterized in that** the nonreturn valve (63, 64)
- on the one hand has a shutoff chamber (I) connected pneumatically to the main pneumatic line (60), a through flow chamber (II) connected pneumatically to the main pneumatic line (60), a shutoff valve seat (610) between the shutoff chamber (I) and the through flow chamber (II), and a shutoff valve element (620), which shuts off the shutoff valve seat (610) in the shutoff mode and opens said seat in the release mode, and
- on the other hand has a control chamber (III), which is connected pneumatically to a control line (110), in particular via a pneumatic pilot operation line (130), which is isolated from the through flow chamber (II) and by means of which a control piston (640) acting on the shutoff valve element (620) can be actuated.

10. Compressed air supply installation according to Claim 8 or 9,
**characterized in that** a control chamber (III) of the pilot-operated nonreturn valve (63, 64) is divided by a dividing seal (652) arranged on the control piston (640) into a control space (III.1) connected pneumatically to a control line (110), in particular via a pneumatic pilot operation line (130), and into a venting space (III.2), which spaces can be connected so as to communicate pneumatically, in particular can be connected adjustably by means of the control valve (74).

11. Compressed air supply installation according to Claim 10,
**characterized in that** the control piston (640) has an annular bead (642) which carries the dividing seal (652), said annular bead having a second side (642.2) facing the venting space (III.2) and a first side (642.1) facing the control space (III.1), wherein a surface of the second side (642.2) on the venting-space side is smaller than a surface of the first side (642.1) on the control-space side.

12. Compressed air supply installation according to one of Claims 10 or 11,
**characterized in that** the venting space (III.2) of the control chamber (III) can be connected pneumatically to a control line (110), in particular via a pneumatic pilot operation line (130), or to the vent line (70), in particular can be connected adjustably by means of the control valve (74) and/or via a further vent line (170).

13. Compressed air supply installation according to one of Claims 1 to 12,
**characterized in that**
the vent line (70) has at least one controllable vent valve (73), and the controllable vent valve (73), as an indirectly switchable relay valve, is part of a solenoid valve arrangement (80) for indirect switching of a compressed air volume, wherein
the solenoid valve arrangement (80) has a control valve (74) for pneumatic control of the relay valve, and the control valve (74) in the pneumatic control line (110) can be subjected to a pressure derived from the main pneumatic line (60), and
is designed for pneumatic control of the vent valve (73) and of the pilot-operated nonreturn valve (63, 64) or throttle check valve (63').

14. Compressed air supply installation according to Claim 13,
**characterized in that** the vent valve (73) and/or the control valve (74) are formed as a unit with the pilot-operated nonreturn valve (63, 64) and/or a restrictor (62) or throttle check valve (63').

15. Compressed air supply installation according to one of Claims 9 to 14,
**characterized in that** the pilot-operated nonreturn valve (64)
on the other hand has a venting chamber (IV) which can be connected pneumatically to the vent line (70), a vent valve seat (670) between the venting chamber (IV) and the vent line (70), and a vent valve element (680), which shuts off the shutoff valve seat (670) in the shutoff mode and opens said seat in the release mode.

16. The compressed air supply installation according to Claim 15,
**characterized in that** the vent valve element (680) forms an integral tappet with the control piston (640), wherein the vent valve element (680) is formed on the other side of a dividing seal (652) of a control piston (640), in particular a control piston (640) has at least one first and one second stepped portion (640.1, 640.2) with different cross-sectional widths.

17. Pneumatic system (100, 200, 300) having the compressed air supply installation (10, 11, 12, 20, 30) according to one of Claims 1 to 16 and a pneumatic installation (90) which is in the form of an air spring installation that has a gallery (95) and at least one branch line (98, 99) connected pneumatically to the gallery (95) and having a bellows (91) and/or a reservoir (92) and a directional control valve (93, 94) arranged ahead of the bellows (91) and/or the reservoir (92) .

18. Method for operating a pneumatic
installation (90), in particular an air spring installation on a vehicle, by means of a compressed air supply installation (10, 11, 12, 20, 30) according to one of Claims 1 to 16, having the following steps:
- filling the pneumatic installation (90) by means of a compressed air flow routed via a main pneumatic line (60) from the compressed air supply installation (10, 11, 12, 20, 30), wherein a pilot-operated nonreturn valve (63, 64) in the main pneumatic line (60) opens automatically;
- holding the pressure in the pneumatic installation (90), wherein the main pneumatic line (60) is shut off against a compressed air flow from the pneumatic installation (90) by means of the pilot-operated nonreturn valve (63, 64), and
- venting the pneumatic installation (90) by means of the compressed air flow routed via the main pneumatic line (60) from the pneumatic installation (90), wherein the pilot-operated nonreturn valve (63, 64) in the main pneumatic line (60) is released.

19. Method according to Claim 18 further having the following steps:
- release of the nonreturn valve (63, 64) by means of a pressure derived from the main pneumatic line (60), and
- pneumatic activation of a vent valve (73) in a vent line (70) by means of the pressure derived from the main pneumatic line (60) in order to release the pilot-operated nonreturn valve (63, 64).

## Revendications

1. Système d'alimentation en air comprimé (10, 11, 12, 20, 30), pour faire fonctionner une installation pneumatique (90), en particulier une installation de suspension pneumatique d'un véhicule, présentant :
- une alimentation en air comprimé (1),
- un raccord d'air comprimé (2) conduisant vers l'installation pneumatique (90),
- un raccord de désaérage (3) conduisant vers l'environnement extérieur,
- une conduite principale pneumatique (60) entre l'alimentation en air comprimé (1) et le raccord d'air comprimé (2), qui présente un séchoir d'air (61) et un clapet antiretour,
- une conduite de désaérage (70) entre le raccord d'air comprimé (2) et le raccord de désaérage (3),
**caractérisé en ce que**
le clapet antiretour est formé en forme de clapet antiretour déverrouillable (63, 64).

2. Système d'alimentation en air comprimé selon la revendication 1,
**caractérisé en ce que** le clapet antiretour (63, 64) peut être déverrouillé pneumatiquement et/ou mécaniquement.

3. Système d'alimentation en air comprimé selon la revendication 1 ou 2,
**caractérisé en ce que** la conduite principale pneumatique (60) et la conduite de désaérage (70) sont raccordées en tant que conduites séparées à un raccord d'alimentation en air comprimé commun (52).

4. Système d'alimentation en air comprimé selon l'une quelconque des revendications 1 à 3,
**caractérisé en ce que** le clapet antiretour déverrouillable (63, 64) est disposé entre le séchoir d'air (61) et le raccord d'air comprimé (2) dans la conduite principale pneumatique (60).

5. Système d'alimentation en air comprimé selon l'une quelconque des revendications 1 à 4, **caractérisé en ce que** la conduite principale pneumatique (60) présente un étranglement (62) et le clapet antiretour déverrouillable (63) dans un montage en série pneumatique ou le clapet antiretour déverrouillable est formé sous la forme d'un clapet antiretour d'étranglement (63') qui est déverrouillable.

6. Système d'alimentation en air comprimé selon l'une quelconque des revendications 1 à 5, présentant en outre :
- une soupape de commande (74),
- une conduite de commande pneumatique (110) entre la conduite principale pneumatique (60) et la soupape de commande (74),
- le clapet antiretour déverrouillable (63, 64) pouvant être déverrouillé par le biais de la soupape de commande (74) avec une pression dérivée de la conduite principale pneumatique (60) par le biais de la conduite de commande pneumatique (110).

7. Système d'alimentation en air comprimé selon la revendication 6,
**caractérisé en ce que**
le clapet antiretour déverrouillable (63, 64) peut être déverrouillé par sollicitation en pression d'une conduite de déverrouillage pneumatique (130) entre la soupape de commande (74) et le clapet antiretour déverrouillable (63, 64), en particulier par le biais de la conduite de commande pneumatique (110).

8. Système d'alimentation en air comprimé selon l'une quelconque des revendications 1 à 7,
**caractérisé en ce qu'**un piston à double relais (640') peut être sollicité en pression de telle sorte que le clapet antiretour (63) puisse être déverrouillé et que simultanément une soupape de désaérage (73) puisse être actionnée, en particulier par le biais de deux éléments d'actionnement du piston à double relais (640'), en particulier par le biais d'un corps de déverrouillage à relais (641') et d'un corps de soupape de désaérage à relais (680'), les éléments d'actionnement étant réalisés sous forme de corps d'une seule pièce ou sous forme de corps séparés.

9. Système d'alimentation en air comprimé selon l'une quelconque des revendications 1 à 8,
**caractérisé en ce que** le clapet antiretour (63, 64) présente
- d'une part une chambre de verrouillage (I) connectée pneumatiquement à la conduite principale pneumatique (60), une chambre de d'écoulement (II) pouvant être connectée pneumatiquement à la conduite principale pneumatique (60) et un siège de soupape de verrouillage (610) entre la chambre de verrouillage (I) et la chambre d'écoulement (II) ainsi qu'un corps de soupape de verrouillage (620) fermant le siège de soupape de verrouillage (610) en mode de verrouillage et le libérant en mode de déverrouillage, et
- d'autre part une chambre de commande (III) connectée pneumatiquement à une conduite de commande (110), en particulier par le biais d'une conduite de déverrouillage pneumatique (130), qui est séparée de la chambre d'écoulement (II) et au moyen de laquelle un piston de commande (640) agissant sur le corps de soupape de verrouillage (620) peut être actionné.

10. Système d'alimentation en air comprimé selon la revendication 8 ou 9,
**caractérisé en ce qu'**une chambre de commande (III) du clapet antiretour déverrouillable (63, 64) est divisée par un joint de séparation (652) disposé au niveau du piston de commande (640) en un espace de commande (III.1) connecté pneumatiquement à une conduite de commande (110), en particulier par le biais d'une conduite de déverrouillage pneumatique (130) et en un espace de désaérage (III.2), qui peuvent être connectés de manière à communiquer pneumatiquement, en particulier de manière ajustable au moyen de la soupape de commande (74).

11. Système d'alimentation en air comprimé selon la revendication 10,
**caractérisé en ce que** le piston de commande (640) présente un bourrelet annulaire (642) portant le joint de séparation (652), lequel présente un deuxième côté (642.2) tourné vers l'espace de désaérage (III. 2) et un premier côté (642.1) tourné vers l'espace de commande (III.1), une surface du côté de l'espace de désaérage du deuxième côté (642.2) étant plus petite qu'une surface du côté de l'espace de commande du premier côté (642.1).

12. Système d'alimentation en air comprimé selon l'une quelconque des revendications 10 ou 11,
**caractérisé en ce que** l'espace de désaérage (III.2) de la chambre de commande (III) peut être connecté pneumatiquement à une conduite de commande (110), en particulier par le biais d'une conduite de déverrouillage pneumatique (130), ou à une conduite de désaérage (70), en particulier de manière ajustable au moyen de la soupape de commande (74) et/ou par le biais d'une conduite de désaérage supplémentaire (170).

13. Système d'alimentation en air comprimé selon l'une quelconque des revendications 1 à 12,
**caractérisé en ce que**
la conduite de désaérage (70) présente au moins une soupape de désaérage commandable (73) et la soupape de désaérage commandable (73), en tant que soupape relais commutable indirectement, fait partie d'un système d'électrovanne (80) pour la commutation indirecte d'un volume d'air comprimé, le système d'électrovanne (80) présentant une soupape de commande (74) pour la commande pneumatique de la soupape relais et la soupape de commande (74) pouvant être exposée, dans la conduite de commande pneumatique (110), à une pression dérivée de la conduite principale pneumatique (60), et
étant réalisé pour la commande pneumatique de la soupape de désaérage (73) et du clapet antiretour déverrouillable (63, 64) ou du clapet antiretour d'étranglement (63').

14. Système d'alimentation en air comprimé selon la revendication 13,
**caractérisé en ce que** la soupape de désaérage (73) et/ou la soupape de commande (74) sont formées suivant une unité structurelle avec le clapet antiretour déverrouillable (63, 64) et/ou un étranglement (62) ou un clapet antiretour d'étranglement (63').

15. Système d'alimentation en air comprimé selon l'une quelconque des revendications 9 à 14, **caractérisé en ce que** le clapet antiretour déverrouillable (64) présente de l'autre côté une chambre de désaérage (IV) pouvant être connectée pneumatiquement à la conduite de désaérage (70) et un siège de soupape de désaérage (670) entre la chambre de désaérage (IV) et la conduite de désaérage (70) ainsi qu'un corps de soupape de désaérage (680) fermant le siège de soupape de désaérage (670) en mode de verrouillage et le libérant en mode de déverrouillage.

16. Système d'alimentation en air comprimé selon la revendication 15,
**caractérisé en ce que** le corps de soupape de désaérage (680) forme avec le piston de commande (640) un poussoir d'une seule pièce, le corps de soupape de désaérage (680) étant formé de l'autre côté d'un joint de séparation (652) d'un piston de commande (640), en particulier un piston de commande (640) présentant au moins une première et une deuxième portion étagée (640.1, 640.2) avec des largeurs de section transversale différentes.

17. Système pneumatique (100, 200, 300) avec le système d'alimentation en air comprimé (10, 11, 12, 20, 30) selon l'une quelconque des revendications 1 à 16 et une installation pneumatique (90) qui est formée en tant qu'installation de suspension pneumatique, qui présente une galerie (95) et au moins une conduite de ramification (98, 99) raccordée pneumatiquement à la galerie (95) avec un soufflet (91) et/ou un accumulateur (92) ainsi qu'une soupape à tiroir (93, 94) montée en amont du soufflet (91) et/ou de l'accumulateur (92).

18. Procédé pour faire fonctionner une installation pneumatique (90), en particulier une installation de suspension pneumatique d'un véhicule, au moyen d'un système d'alimentation en air comprimé (10, 11, 12, 20, 30) selon l'une quelconque des revendications 1 à 16, présentant les étapes suivantes :
- remplissage de l'installation pneumatique (90) au moyen d'un écoulement d'air comprimé guidé par le biais d'une conduite principale pneumatique (60), provenant du système d'alimentation en air comprimé (10, 11, 12, 20, 30), un clapet antiretour déverrouillable (63, 64) s'ouvrant automatiquement dans la conduite principale pneumatique (60) ;
- maintien de la pression dans l'installation pneumatique (90), la conduite principale pneumatique (60) étant bloquée vis-à-vis d'un écoulement d'air comprimé provenant de l'installation pneumatique (90) au moyen du clapet antiretour déverrouillable (63, 64), et
- désaérage de l'installation pneumatique (90) au moyen de l'écoulement d'air comprimé provenant de l'installation pneumatique (90), guidé par le biais de la conduite principale pneumatique (60), le clapet antiretour déverrouillable (63, 64) étant déverrouillé dans la conduite principale pneumatique (60).

19. Procédé selon la revendication 18, présentant en outre les étapes suivantes :
- déverrouillage du clapet antiretour (63, 64) avec une pression dérivée de la conduite principale pneumatique (60) et
- commande pneumatique d'une soupape de désaérage (73) dans une conduite de désaérage (70) avec la pression dérivée de la conduite principale pneumatique (60) pour déverrouiller le clapet antiretour déverrouillable (63, 64).
